(19) Europäisches Patentamt
European Patent Office
Office européen des brevets

(11) **EP 4 661 329 A1**

(12) **EUROPEAN PATENT APPLICATION**
published in accordance with Art. 153(4) EPC

(43) Date of publication:
**10.12.2025 Bulletin 2025/50**

(21) Application number: **24756134.3**

(22) Date of filing: **05.02.2024**

(51) International Patent Classification (IPC):
**H04L 5/00** (2006.01)

(52) Cooperative Patent Classification (CPC):
**H04L 5/00; H04W 40/22; H04W 72/044; H04W 72/0446; H04W 72/20**

(86) International application number:
**PCT/CN2024/076169**

(87) International publication number:
**WO 2024/169760 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.02.2023 CN 202310176131**
**07.04.2023 CN 202310401615**

(71) Applicant: **Huawei Technologies Co., Ltd.**
**Shenzhen, Guangdong 518129 (CN)**

(72) Inventors:
• **YAN, Mao**
  **Shenzhen, Guangdong 518129 (CN)**
• **SONG, Xinghua**
  **Shenzhen, Guangdong 518129 (CN)**
• **PENG, Zhongchong**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **RELAY TRANSMISSION METHOD, COMMUNICATION APPARATUS, AND COMMUNICATION SYSTEM**

(57) This application provides a relay transmission method, a communication apparatus, and a communication system. The method includes: A network device sends first information to a relay device. The first information is used to configure L time offsets and N relay beams. The network device sends second information to the relay device. The second information indicates L relay beams in the N relay beams and T pieces of time resource information that correspond to the L time offsets, and T<L. The relay device determines L time resources in L time units based on the L time offsets and the T pieces of time resource information. The relay device forwards a signal from the network device or a signal from a terminal device via the L relay beams and the L time resources. This can implement relay transmission of the signal on demand, and improve resource utilization.

200

| Network device | | Relay device |
|---|---|---|

S201: Send first information, where the first information is used to configure L time offsets and N relay beams

S202: Send second information, send second information, where the second information indicates T pieces of time resource information and Q relay beams that correspond to the L time offsets, and T, L, and Q are positive integers

S203: Determine, based on the first information and the second information, J time resources in J time units and J relay beams corresponding to the J time resources

S204: Forward a signal from the network device or a signal from a terminal device via the J relay beams and the J time resources

FIG. 2

**Description**

This application claims priorities to Chinese Patent Application No. 202310176131.4, filed with the China National Intellectual Property Administration on February 17, 2023 and entitled "RELAY TRANSMISSION METHOD, COMMUNICATION APPARATUS, AND COMMUNICATION SYSTEM", and to Chinese Patent Application No. 202310401615.4, filed with the China National Intellectual Property Administration on April 7, 2023 and entitled "RELAY TRANSMISSION METHOD, COMMUNICATION APPARATUS, AND COMMUNICATION SYSTEM", both of which are incorporated herein by reference in their entireties.

**TECHNICAL FIELD**

This application relates to the communication field, and more specifically, to a relay transmission method, a communication apparatus, and a communication system.

**BACKGROUND**

In a mobile communication system, relay device assisted communication between a network device and a terminal device is proposed, to improve network coverage, a cell edge throughput, and the like. A signal between the network device and the terminal device may be forwarded by the relay device to transmit the signal. How the network device controls the relay device to perform relay transmission of a signal via a relay resource to improve signal coverage becomes an urgent problem to be resolved currently.

**SUMMARY**

Embodiments of this application provide a relay transmission method, a communication apparatus, and a communication system, to implement relay transmission of a signal on demand, and improve resource utilization.
According to a first aspect, a relay transmission method is provided. The method may be applied to a communication system including a relay device and a network device.
The method includes: The network device sends first information to the relay device. The first information is used to configure L time offsets and N relay beams, and L and N are positive integers. The network device sends second information to the relay device. The second information indicates L relay beams in the N relay beams and T pieces of time resource information that correspond to the L time offsets, and T is a positive integer less than or equal to L. The relay device determines L time resources in L time units based on the L time offsets and the T pieces of time resource information. The relay device forwards a signal from the network device or a signal from a terminal device via the L relay beams and the L time resources.
Based on the foregoing solution, the network device may pre-configure, for the relay device based on the first information, a candidate resource set (including the L time offsets and the N relay beams) used for signal relay transmission, and then indicate one or more candidate resources to the relay device based on the second information, so that the relay device may determine one or more resources (including a signal transmission resource and a beam resource) used for relay signal transmission. In addition, the relay device is triggered to perform signal relay transmission via the one or more resources. Therefore, the relay device can perform signal relay transmission on demand, to improve flexibility of relay transmission and utilization of relay transmission resources.
For example, the first information may be a radio resource control (radio resource control, RRC) message. The second information may be downlink control information (downlink control information, DCI). However, this application is not limited thereto. The first information may alternatively be a medium access control (medium access control, MAC) control element (control element, CE), or other configuration information defined in the communication system. The second information may alternatively be other control information defined in the communication system.
In an implementation, the network device configures the candidate resource set based on the first information, and then indicates some or all candidate resources in the candidate resource set based on the second information, so that the relay device determines a resource for signal relay transmission and performs signal relay transmission. The candidate resource set configured based on the first information may be referred to as an aperiodic resource set, the L time resources and/or the L relay beams may be aperiodic resources, and the first information may be referred to as configuration information of the aperiodic resources. The second information may be trigger information used to trigger aperiodic signal transmission of signal relay transmission. According to a second aspect, a signal relay transmission method is provided. The method may be performed by a communication apparatus. The communication apparatus may be a relay device or a module (for example, a chip or a chip system) configured in (or used in) a relay device.
The method includes: The relay device receives first information from a network device. The first information is used to configure L time offsets and N relay beams, and L and N are positive integers. The relay device receives second information from the network device. The second information indicates T pieces of time resource information and L relay beams that correspond to the L time offsets, and T is a positive integer less than or equal to L. The relay device determines L time resources in L time units based on the L time offsets and the T pieces of time resource information. The relay device forwards a signal from the network device to a terminal device or a signal from a terminal device to the network device via the L relay beams and the L time resources.

With reference to the first aspect or the second aspect, in some implementations of the first aspect or the second aspect, the first information is specifically used to configure at least one relay beam set corresponding to the L time offsets, the at least one relay beam set includes the N relay beams, one time offset corresponds to one relay beam set, and one relay beam set corresponds to one or more time offsets. A first relay beam that is indicated by the second information and that corresponds to a first time offset is a relay beam in the relay beam set corresponding to the first time offset, the first time offset is one of the L time offsets, and the first relay beam is one of the L relay beams. Based on the foregoing solution, the first information may be used to configure the at least one relay beam set corresponding to the L time offsets, and the second information may be used to determine, in a relay beam set corresponding to each time offset, a relay beam corresponding to the time offset. In this manner, resource indication flexibility can be improved.

It should be understood that the time offset is one of the L time offsets. In addition, the time offset may be any one of the L time offsets. The one or more time offsets are some or all of the L time offsets. Similarly, the time resource information in the following is one of the T pieces of time resource information, and may be any one of the T pieces of time resource information.

Manners of configuring the L time offsets based on the first information include but are not limited to the following manners:

Manner 1: The first information includes the L time offsets.

Manner 2: The first information includes a second time offset in the L time offsets and L-1 deviations, and the L-1 deviations are deviations between each of L-1 time offsets other than the second time offset in the L time offsets and the second time offset.

Manner 3: The first information includes a second time offset in the L time offsets, one deviation, and the quantity L of time offsets, and the L time offsets are an arithmetic sequence that uses the second time offset as a start value and uses the deviation as a difference.

Manner 4: The first information includes a second time offset in the L time offsets and the quantity L of time offsets, and the L time offsets are an arithmetic sequence that uses the second time offset as a start value and uses a predefined deviation as a difference.

Indication manners of the time resource information include but are not limited to the following manners:

Manner A: One piece of time resource information includes one time parameter group.

Manner B: One piece of time resource information includes an identifier of one of M time parameter groups, and the M time parameter groups are configured based on the first information.

Manner C: One piece of time resource information includes at least one parameter in one time parameter group, one time parameter group includes a plurality of parameters, and a parameter other than the at least one parameter in the plurality of parameters is configured based on the first information or predefined.

One time parameter group is used to determine at least one of the L time resources.

Based on the foregoing solution, in the foregoing configuration or indication manners, the relay device and the network device can reach a consensus on the configured information and/or the indicated information, to improve efficiency of configuring and/or indicating relay forwarding resources by the network device.

With reference to the first aspect or the second aspect, in some implementations of the first aspect or the second aspect, the first information is further used to configure time resource information corresponding to each of the N relay beams, the T pieces of time resource information are time resource information that corresponds to the L relay beams indicated by the second information, T is equal to L, one piece of time resource information includes one time parameter group, and one time parameter group is used to determine at least one of the L time resources.

Based on the foregoing solution, the network device configures, for the terminal device based on the first information, the time resource information corresponding to each relay beam, and the second information implicitly indicates, by indicating the relay beam, the time resource information corresponding to the relay beam. This can reduce overheads of the second information, for example, the second information is DCI, and can improve utilization of a control signaling resource (for example, a physical control channel (physical downlink control channel, PDCCH) resource).

With reference to the first aspect or the second aspect, in some implementations of the first aspect or the second aspect, the L time offsets sequentially and cyclically correspond to the T pieces of time resource information; or in the L time offsets, every P consecutive time offsets correspond to one piece of time resource information in a sequence of arrangement, where P is an integer determined based on L and T. The first time offset in the L time offsets is used to determine a first time unit in the L time units, and the time resource information corresponding to the first time offset is used to determine the time resource in the first time unit.

Based on the foregoing solution, the relay device and the network device may determine a correspondence between the time offset and the time resource information in a same manner, to reach a consensus. This reduces a resource waste caused by a failure to reach a consensus.

With reference to the first aspect or the second aspect, in some implementations of the first aspect or the second aspect, the L time offsets include at least two time offsets with equal values, the at least two time offsets correspond to a same time unit, and the time resource information corresponding to the at least two time offsets is used to determine different time resources in the same time unit.

Based on the foregoing solution, the L time offsets include at least two time offsets with equal values, so that the network device can indicate, to the relay device, different resources used for signal relay transmission in a same time unit. This improves resource indication flexibility.

With reference to the first aspect or the second aspect, in some implementations of the first aspect or the second aspect, the quantity N of relay beams configured based on the first information is used to determine the quantity L or a maximum value of L of the L time offsets; and/or the first information is further used to configure the M time parameter groups, one time parameter group is used to determine at least one of the L time resources, the quantity M of time parameter groups configured based on the first is used to determine the quantity L of time offsets or the maximum quantity $L_{max}$ of occasion offsets configured based on the first information, and L is less than or equal to $L_{max}$.

With reference to the first aspect or the second aspect, in some implementations of the first aspect or the second aspect, the quantity N of relay beams configured based on the first information is used to determine the quantity T of time resource information indicated by the second information or a maximum quantity $T_{max}$, and T is less than $T_{max}$; or the first information is further used to configure the M time parameter groups, one time parameter group is used to determine at least one of the L time resources, the quantity M of time parameter groups configured based on the first is used to determine the quantity T of time resource information indicated by the second information or the maximum quantity $T_{max}$, and T is less than $T_{max}$. With reference to the first aspect or the second aspect, in some implementations of the first aspect or the second aspect, that the relay device determines the L time resources in the L time units based on the L time offsets and the T pieces of time resource information includes: The relay device determines the L time units based on a second time unit, an initial offset, and the L time offsets. The second time unit is a time unit in which the second information is located, and an offset between one of the L time units and the second time unit is a sum of one time offset and the initial offset. The relay device determines the L time resources in the L time units based on the T pieces of time resource information.

Based on the foregoing solution, the initial offset is an offset between the second time unit and the time resource. For example, after the initial offset is predefined or determined based on a capability of the relay device, the second information does not need to indicate the initial offset. This can reduce indication overheads of the second information, and increase resource utilization.

With reference to the first aspect or the second aspect, in some implementations of the first aspect or the second aspect, the initial offset is determined based on one or more pieces of the following capability information of the relay device:
beam switching time on a backhaul link, beam switching time on an access link, decoding time of a physical downlink control channel PDCCH, a subcarrier spacing of a PDCCH, an identifier of a subcarrier spacing of a PDCCH, a subcarrier spacing of the time resource, or an identifier of a subcarrier spacing of the time resource.

With reference to the first aspect or the second aspect, in some implementations of the first aspect or the second aspect, the first information is specifically used to configure a plurality of resource sets, each resource set corresponds to V time resource sets, and V is a positive integer; and/or each resource set corresponds to one or more beam sets. Each time resource set includes a plurality of time parameter groups.

For example, the time parameter group includes one or more parameters of a time offset, an identifier of a start symbol, and duration.

With reference to the first aspect or the second aspect, in some implementations of the first aspect or the second aspect, the second information indicates at least one piece of the following information:
an identifier of the resource set, the time resource information, or an identifier of the relay beam.

With reference to the first aspect or the second aspect, in some implementations of the first aspect or the second aspect, an identifier, in the second information, of one resource set corresponds to the T pieces of time resource information in the second information, and/or an identifier of one resource set corresponds to identifiers of the L relay beams.

With reference to the first aspect or the second aspect, in some implementations of the first aspect or the second aspect, the T pieces of time resource information correspond to V time resource sets corresponding to one resource set, and one piece of time resource information indicates one time parameter group in one time resource set.

Optionally, a quantity of bits that are in the second information and that are occupied by one piece of time resource information is determined based on a quantity of time parameter groups included in a time resource set corresponding to the time resource information.

With reference to the first aspect or the second aspect, in some implementations of the first aspect or the second aspect, it may be predefined that a plurality of indexes correspond to a plurality of information parameter combinations, and one information parameter combination includes at least one format parameter of the second information. The first information includes one of the plurality of indexes, and a format parameter included in an information parameter combination corresponding to the index is a format parameter of the second information.

Optionally, each information parameter combination includes at least one of the following format parameters: a length of the second information, a quantity of bits of a payload of the second information, a quantity of bits of an identifier, of one resource set, in the second information, a quantity of bits occupied by one piece of time resource information in the second information, a quantity of bits occupied by an identifier, of one relay beam, in the second information, or a quantity of fields.

According to a third aspect, a signal relay transmission method is provided. The method may be performed by a communication apparatus. The communication apparatus may be a network device or a module (for example, a chip or a chip system) configured in (or used in) a network device.

The method includes: The network device sends first information to a relay device. The first information is used to configure L time offsets and N relay beams, and L and N are positive integers. The network device sends second information to the relay device. The second information indicates L relay beams in the N relay beams and T pieces of time resource information that correspond to the L time offsets, and T is a positive integer less than or equal to L.

With reference to the third aspect, in some implementations of the third aspect, the network device determines, based on capability information of the relay device, whether the relay device supports one or more of the following types of control signaling:

aperiodic control signaling (which is also referred to as dynamic control signaling), semi-persistent control signaling, or periodic control signaling.

According to a fourth aspect, a communication apparatus is provided. In a design, the apparatus may include modules that one-to-one correspond to the method/operations/steps/actions described in the second aspect. The modules may be hardware circuits, may be software, or may be implemented by using a combination of a hardware circuit and software. In a design, the apparatus includes a processing unit and a transceiver unit. The transceiver unit is configured to receive first information from a network device. The first information is used to configure L time offsets and N relay beams, and L and N are positive integers. The transceiver unit is configured to receive second information from the network device. The second information indicates L relay beams in the N relay beams and T pieces of time resource information that correspond to the L time offsets, and T is a positive integer less than or equal to L. The processing unit is configured to determine L time resources in L time units based on the L time offsets and the T pieces of time resource information. The processing unit is further configured to forward a signal from the network device or a signal from a terminal device via the L relay beams and the L time resources.

According to a fifth aspect, a communication apparatus is provided. In a design, the apparatus may include modules that one-to-one correspond to the method/operations/steps/actions described in the third aspect. The modules may be hardware circuits, may be software, or may be implemented by using a combination of a hardware circuit and software. In a design, the apparatus includes a processing unit and a transceiver unit. The transceiver unit is configured to send first information to a relay device. The first information is used to configure L time offsets and N relay beams, and L and N are positive integers. The transceiver unit is further configured to send second information to the relay device. The second information indicates L relay beams in the N relay beams and T pieces of time resource information that correspond to the L time offsets, and T is a positive integer less than or equal to L.

According to a sixth aspect, a communication apparatus is provided, and includes a processor. The processor may implement the method performed by the relay device in the second aspect and any one of the possible implementations of the second aspect, and/or may implement the method performed by the network device in the third aspect and any one of the possible implementations of the third aspect.

Optionally, the communication apparatus further includes a memory. The processor may be configured to execute instructions stored in the memory, to implement the method in the second aspect and any one of the possible implementations of the second aspect, and/or implement the method in the third aspect and any one of the possible implementations of the third aspect. In an implementation, the processor is integrated with the memory. In another implementation, the processor includes the memory.

Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a communication device (for example, the communication device is a relay device, a network device, or a terminal device). When the communication apparatus is the communication device, the communication interface may be a transceiver or an input/output interface.

In another implementation, the communication apparatus is a chip configured in the communication device. When the communication apparatus is the chip configured in the communication device, the communication interface may be an input/output interface.

Optionally, the transceiver may be a transceiver circuit. Optionally, the input/output interface may be an input/output circuit.

According to a seventh aspect, an embodiment of this application provides a communication apparatus, including: a logic circuit and a communication interface. The logic circuit is configured to process to-be-processed information, to obtain processed information, and the communication interface is configured to obtain the to-be-processed information, and/or output the processed information, so that the communication apparatus performs the method in the second aspect and any one of the possible implementations of the second aspect, and/or perform the method in the third aspect and any one of the possible implementations of the third aspect. Optionally, the communication interface includes an input interface and an output interface.

According to an eighth aspect, a processor is provided, and includes an input circuit, an output circuit, and a processing circuit. The processing circuit is configured to receive a signal by using the input circuit, and transmit a signal by using the output circuit, so that the processor performs the method in the second aspect and any one of the possible implementations of the second aspect, and/or performs the method in the third aspect and any one of the possible implementations of the third aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a ninth aspect, a computer program product is provided. The computer program product includes a computer program (which may also be referred to as code or instructions). When the computer program is run, a computer is enabled to perform the method in the second aspect and any one of the possible implementations of the second aspect, and/or perform the method in the third aspect and any one of the possible implementations of the third aspect.

According to a tenth aspect, a computer-readable storage medium is provided. The computer-readable storage medium stores a computer program (which may also be referred to as code or instructions). When the computer program is run on a computer, the computer is enabled to perform the method in the second aspect and any one of the possible implementations of the second aspect, and/or perform the method in the third aspect and any one of the possible implementations of the third aspect.

According to an eleventh aspect, a communication system is provided, and includes at least one relay device or at least one network device.

## BRIEF DESCRIPTION OF DRAWINGS

FIG. 1 is a diagram of an architecture of a communication system according to an embodiment of this application;
FIG. 2 is a schematic flowchart of a signal transmission method according to an embodiment of this application;
FIG. 3 is a diagram of a correspondence between a time offset and time resource information according to an embodiment of this application;
FIG. 4 is another diagram of a correspondence between a time offset and time resource information according to an embodiment of this application;
FIG. 5 to FIG. 9 are diagrams of a signal transmission method according to an embodiment of this application;
FIG. 10 and FIG. 11 are diagrams in which second information takes effect for a plurality of times according to an embodiment of this application;
FIG. 12 is a diagram of activating a plurality of resource sets based on second information according to an embodiment of this application;
FIG. 13 is a block diagram of an example of a communication apparatus according to an embodiment of this application;
FIG. 14 is a diagram of a structure of a relay device according to an embodiment of this application; and
FIG. 15 is a diagram of a structure of another example of a network device according to an embodiment of this application.

## DESCRIPTION OF EMBODIMENTS

The following describes technical solutions in this application with reference to accompanying drawings.

In embodiments of this application, "/" may indicate an "or" relationship between associated objects. For example, A/B may indicate A or B. "and/or" may indicate that there are three relationships between associated objects.

For example, A and/or B may indicate the following three cases: Only A exists, both A and B exist, and only B exists, where A and B may be singular or plural. For ease of describing the technical solutions in embodiments of this application, terms such as "first" and "second" may be used for differentiation in embodiments of this application. The words such as "first" and "second" do not limit a quantity and an execution sequence, and the words such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in this application.

The technical solutions in embodiments of this application may be applied to various communication systems, for example, a long term evolution (long term evolution, LTE) system, a 5th generation (5th generation, 5G) communication system, for example, a 5G new radio (new radio, NR) system, a 6th generation (6th generation, 6G) communication system, a future communication system, a system integrating a plurality of communication systems, or the like. This is not limited in embodiments of this application.

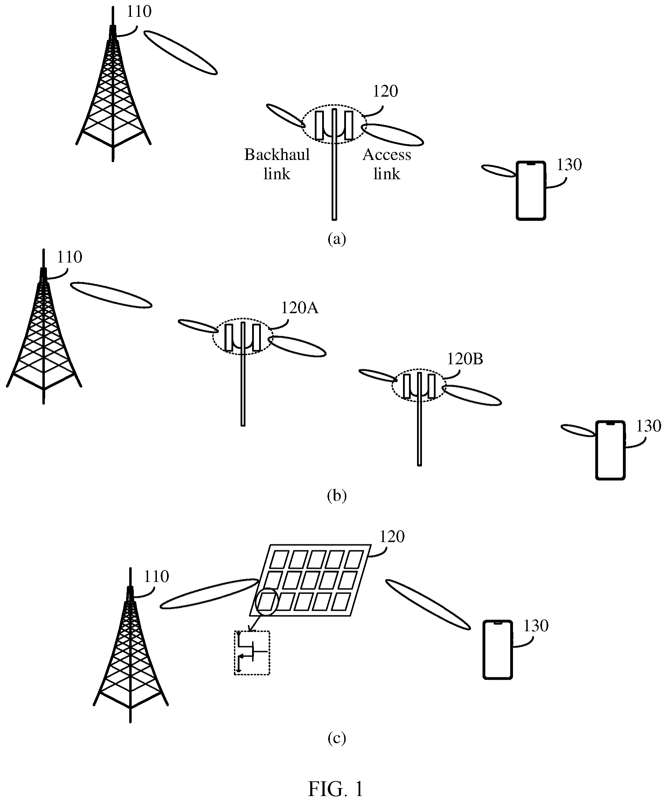

FIG. 1 is a diagram of an architecture of a communication system applicable to a method according to an embodiment of this application. The communication system includes at least one network device and at least one terminal device, and the communication system further includes at least one relay device. The relay device may assist in communication between the network device and the terminal device. The relay device may include a plurality of antennas (or antenna panels). Some antennas are antennas on a backhaul link side, and are configured to communicate with the network device through a backhaul link. The other antennas are antennas on an access link side, and are configured to communicate with the terminal device through an access link. The relay device may perform downlink forwarding. The network device sends a downlink signal through the backhaul link, and the relay device forwards, to the terminal device through the access link, the received signal received through the backhaul link. Correspondingly, the terminal device receives, through the access link, the downlink signal forwarded by the relay device. The relay device may also perform uplink forwarding. The terminal device sends an uplink signal through the access link, and the relay device forwards, to the network device through the backhaul link, the received signal received through the access link.

(a), (b), and (c) in FIG. 1 respectively show three different architectures. (a) in FIG. 1 shows a single-hop forwarding architecture, (b) in FIG. 1 shows a multi-hop forwarding architecture, and (c) in FIG. 1 shows a reflective forwarding architecture.

(a) in FIG. 1 shows a network device 110, a relay device 120, and a terminal device 130. The network device 110 may provide network coverage for a specific geographical area. As described above, when the network device 110 is far away from the terminal device 130, communication quality deteriorates. Therefore, the relay device 120 is introduced to assist in communication between the network device 110 and the terminal device 130. As shown in FIG. 1, a beam of the relay device on the backhaul link side may receive a signal from the network device, and send the signal to the terminal device 130 via a beam on the access link side. Similarly, the network device 110 may send a downlink signal to the terminal device 130 by using the relay device 120, and the terminal device 130 may also send an uplink signal to the network device 110 by using the relay device 120.

(b) in FIG. 1 shows the network device 110, relay devices 120A and 120B, and the terminal device 130. Different from (a) in FIG. 1, (b) in FIG. 1 shows a plurality of relay devices (for example, the relay devices 120A and 120B in the figure). In other words, a downlink signal from the network device 110 may arrive at the terminal device 130 through forwarding by the plurality of relay devices, an uplink signal from the terminal device 130 may also arrive at the network device 110 through forwarding by the plurality of relay devices. It should be understood that processing performed by the relay devices 120A and 120B on the received signal in (b) in FIG. 1 is similar to a processing process performed by the relay device 120 in (a) in FIG. 1. Details are not described again.

(c) in FIG. 1 shows the network device 110, the relay device 120, and the terminal device 130. A difference between (c) in FIG. 1 and (a) and (b) in FIG. 1 lies in that the relay device 120 uses a reflector antenna panel to forward a signal through reflection.

In this application, the relay device may be used in a cascading multi-hop relay communication network, that is, the relay node may establish a connection to the network device by using at least one upper-level relay node, and is controlled by the network device. In this case, the upper-level relay node may be considered as a special network device. Alternatively, the relay node may establish a connection to the terminal device by using at least one lower-level relay node. In this case, the lower-level relay node may be considered as a special terminal device.

The relay device in embodiments of this application has a signal forwarding function. In a form of the relay device, signal forwarding of the relay device may be amplifying a signal and then forwarding the signal, and the relay device may further shift a carrier frequency of the signal. Alternatively, the relay device may demodulate and re-modulate the signal and then forward the signal, or perform noise reduction on the signal and then forward the signal. The relay device in this form may be referred to as an amplify-and-forward relay device or a network controlled repeater (network controlled repeater, NCR). In another form of the relay device, the relay device may directly reflect or transmit a signal by using a special reflector antenna or transmission antenna. The relay device in this form may be referred to as a reflector, a reflecting surface, or another name, for example, an intelligent reflecting surface (intelligent reflecting surface), a reconfigurable reflecting surface (reconfigurable reflecting surface, RIS), a reflective array, an intelligent reflecting array (intelligent reflecting array), a reflector, an intelligent reflector, a backscatter device (backscatter device), a passive device (passive device), a semi-passive device (semi-passive device), or an ambient signal device (ambient signal device). The relay device may alternatively be considered as a terminal in a special form. In addition, if relay devices are classified based on a relay control capability of a network side, the relay devices may be classified into a non-intelligent relay device and an intelligent relay device; or an uncontrolled relay device (uncontrolled repeater) and a network controlled relay device (network controlled repeater, NetConRepeater). The network device may control the intelligent relay to perform more performance enhancement functions, for example, relay transmit power control, relay amplification gain control, relay beam scanning control, and relay precoding control.

The network device in embodiments of this application may be a radio access network device, and the radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like. The network device provided in embodiments of this application may alternatively be a module or a unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions at a radio link control layer and a medium access control (medium access control, MAC) layer of the base station, and may further complete some or all of functions at a physical layer. In some other deployments, the network device may alternatively be an antenna unit (radio unit, RU), or the like. In some other deployments, an access network may use an open radio access network (open radio access network, ORAN) architecture or the like, and the network device may be a node in the ORAN architecture. A specific type of the network device is not specifically limited in this application. For example, when the access network uses the ORAN architecture, the network device in embodiments of this application may be an access network device in an ORAN, a module in the access network device, or the like. In an ORAN system, a CU may also be referred to as an open (open, O)-CU, a DU may also be referred to as an O-DU, a CU-DU may also be referred to as an O-CU-DU, a CU-UP may also be referred to as an O-CU-UP, and an RU may also be referred to as an O-RU. Any unit of the CU (or the CU-CP and the CU-UP), the DU, and the RU in this application may be implemented by using a software module, a hardware module, or a combination of the software module and the hardware module.

For specific descriptions of the foregoing protocol layers, refer to related technical specifications of the 3rd generation partnership project (3rd generation partnership project, 3GPP). The radio access network device may be a macro base station, or may be a micro base station, an indoor base station, or the like. The network device may alternatively be an operations, administration, and maintenance (operations, administration, and maintenance, OAM) device. A specific technology and a specific device form that are used for the network device are not limited in embodiments of this application.

The terminal device in embodiments of this application may be a device with a wireless transceiver function, and may send a signal to a base station or receive a signal from the base station. The terminal device may also be referred to as a terminal, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), Internet of things (Internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including a function of the terminal device. A function of the relay device may alternatively be performed by a module (for example, a chip or a modem) in the relay device, or may be performed by an apparatus including the function of the relay device.

It should be understood that "sending information to a communication device (for example, the communication device may be a network device, a relay device, or a terminal device) "in this application may be understood as that a destination end of the information is the communication device, and may include directly or indirectly sending the information to the communication device. "Receiving information from a communication device" may be understood as that a source end of the information is the communication device, and may include directly or indirectly receiving the information from the communication device. Necessary processing may be performed on the information between the source end for sending the information and the destination end, for example, a format change. However, the destination end may understand valid information from the source end. Similar descriptions in this application may be understood similarly, and details are not described herein.

In embodiments of this application, the network device may pre-configure, for the relay device based on first information, a candidate resource set (including a parameter of a candidate time resource, a parameter of a candidate beam resource, and the like) used for signal relay transmission, and then indicate one or more candidate resource sets to the relay device based on second information, so that the relay device may determine one or more resources used for relay signal transmission. In addition, the relay device is triggered to perform signal relay transmission via the one or more resources. Therefore, the relay device can perform signal relay transmission on demand, to improve flexibility of relay transmission and utilization of relay transmission resources.

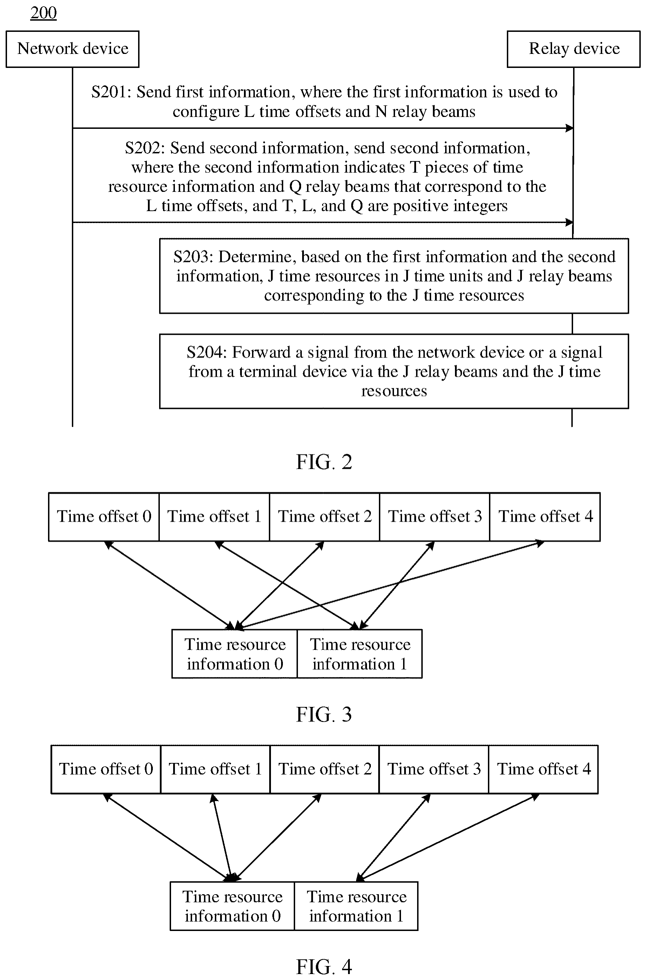

FIG. 2 is a schematic flowchart of a relay transmission method according to an embodiment of this application.

S201: A network device sends first information to a relay device, where the first information is used to configure L time offsets and N relay beams, and L and N are positive integers.

Correspondingly, the relay device receives the first information from the network device, and determines the L time offsets and the N relay beams based on the first information. For example, the first information may be a radio resource control (radio resource control, RRC) message.

The L time offsets are used to determine time units for signal relay transmission. The time offset may be a quantity of time units. For example, the time unit may be a frame, a subframe, a slot, a symbol, or a symbol group. In embodiments of this application, an example in which the time unit is a slot and the time offset is a quantity of slots is used for description. It should be understood that this application is not limited thereto.

The relay device may determine, based on a time unit in which second information is located and one of the L time offsets in S202, a time unit used for signal relay transmission. For details, refer to descriptions in S203. For example, the time unit may be a frame, a subframe, a slot, a symbol, or a symbol group. An example in which the time unit is a slot is used for description in embodiments of this application. It should be understood that this application is not limited thereto.

Manners in which the network device configures the L time offsets based on the first information include but are not limited to Manner 1 to Manner 4.

Manner 1: The first information includes the L time offsets.

For example, if five time offsets may be configured in the first information, the first information may include five slot quantities, for example, 3, 4, 6, 7, and 8. In this case, the five time offsets are: 3 slots, 4 slots, 6 slots, 7 slots, and 8 slots.

For example, the first information may include time offset list information. For example, the time offset list information may be denoted as Fwd-SlotOffsetList. For example, a format of Fwd-SlotOffsetList may be represented as follows:

$$\text{Fwd-SlotOffsetList ::= SEQUENCE (SIZE (1.. maxNrofFwd-Offsets)) OF}$$

$$\text{INTEGER}(0..N_{SO\text{-}max})$$

maxNrofFwd-Offsets indicates a maximum value $L_{max}$ of L, that is, the quantity L of time offsets that can be configured based on the first information is an integer greater than or equal to 1 and less than or equal to $L_{max}$. $N_{SO\text{-}max}$ indicates a maximum value of the time offset, and one time offset may be represented by an integer greater than or equal to 0 and less than or equal to $N_{SO\text{-}max}$. For example, $N_{SO\text{-}max}$ may be 16, that is, the maximum value of the time offset is 16; or $N_{SO\text{-}max}$ may be 32, that is, the maximum value of the time offset is 32; or $N_{SO\text{-}max}$ may be 79, that is, the maximum value of the time offset is 79. However, this application is not limited thereto. In the first information, L integers from 0 to $N_{SO\text{-}max}$ may be configured based on Fwd-SlotOffsetList, and the relay device determines the L time offsets based on the L integers.

Manner 2: The first information includes a second time offset in the L time offsets and L-1 deviations, and the L-1 deviations are deviations between each of L-1 time offsets other than the second time offset in the L time offsets and the second time offset. Alternatively, the L-1 deviations include a deviation between an $(i+1)^{th}$ time offset and an $i^{th}$ time offset in the L time offsets, where i=1, ..., and L-1, and the second time offset is a $1^{st}$ offset in the L time offsets.

The second time offset may be a minimum time offset in the L time offsets, or referred to as an initial time offset. For example, the first information is used to configure five time offsets, and L=5. The first information includes that the second time offset is 3, and the first information further includes four deviations: 1, 3, 4, and 5. For example, deviations between the second time offset 3 and four time offsets other than the second time offset in the five time offsets are: 1, 3, 4, and 5. After receiving the first information, the relay device may determine the minimum time offset 3, the second time offset 3, and the four deviations, and determine that the other four time offsets are: 4, 6, 7, and 8. For another example, each of the four deviations is a deviation between two adjacent time offsets in the five time offsets. After receiving the first information, the relay device may determine the minimum time offset 3 and the deviations: 1, 3, 4, and 5, and determine that the deviation between a 2nd time offset and the 1st time offset is 1 (that is, i=1). In this case, the 2nd time offset is 4. It is determined that a deviation between a 3rd time offset and the 2nd time offset is 3. In this case, the 3rd time offset is 7 (that is, i=2). Similarly, it may be determined that a 4th time offset and a 5th time offset are: 11 and 16.

For example, the first information may include time offset configuration information. For example, the time offset configuration information may be denoted as Fwd-SlotOffset. For example, a format of Fwd-SlotOffset may be represented as follows:

Fwd-SlotOffset ::= SEQUENCE {

    Fwd-InitialSlotOffset     INTEGER($0..N_{SO\text{-}max}$)

    Fwd-SlotOffsetGap     SEQUENCE (SIZE (1.. maxNrofFwd-Offsets-1)) OF

INTEGER($0..N_{SO\text{-}max}$)

       ...}

The time offset configuration information includes initial time offset information that is denoted as Fwd-InitialSlotOffset. Fwd-InitialSlotOffset indicates an integer, namely, the second time offset, greater than or equal to 0 and less than or equal to $N_{SO\text{-}max}$. The time offset configuration information further includes deviation information, the deviation information indicates the L-1 deviations, the L-1 deviations are all integers greater than or equal to 0 and less than or equal to $N_{SO\text{-}max}$, and a sum of each deviation and the second time offset is not greater than $N_{SO\text{-}max}$. A quantity of deviations is less than or equal to maxNrofFwd-Offsets-1, that is, $L_{max}$ - 1.

Manner 3: The first information includes a second time offset in the L time offsets, one deviation, and the quantity L of time offsets, and the L time offsets are an arithmetic sequence that uses the second time offset as a start value and uses the deviation as a difference.

For example, the first information includes the second time offset being 0, the deviation being 2, and the quantity L of time offsets being 4. The four time offsets are an arithmetic sequence that uses the second time offset 0 as a start value and uses the deviation 2 as an arithmetic value, that is, the four time offsets are 0, 2, 4, and 6.

For example, the first information may include time offset configuration information. For example, the time offset configuration information may be denoted as Fwd-SlotOffset. For example, a format of Fwd-SlotOffset may be represented as follows:

Fwd-SlotOffset ::= SEQUENCE {

    Fwd-InitialSlotOffset     INTEGER($0.. N_{SO\text{-}max}$)

    Fwd-SlotOffsetGap     INTEGER($0.. N_{SO\text{-}max}$)

    Fwd-NrofSlots   INTEGER(0..13)

       ...}

Fwd-InitialSlotOffset indicates the second time offset, the second time offset is an integer greater than or equal to 0 and less than or equal to $N_{SO\text{-}max}$, and Fwd-SlotOffsetGap indicates a deviation, a sum of the second time offset configured based on the time offset configuration information and a product of the deviation and L-1 is not greater than $N_{SO\text{-}max}$. Fwd-NrofSlots indicates the quantity L of time offsets. The relay device may determine the L time offsets based on the time offset configuration information.

Manner 4: The first information includes a second time offset in the L time offsets and the quantity L of time offsets, and the L time offsets are an arithmetic sequence that uses the second time offset as a start value and uses a first deviation as a difference. The first deviation is a predefined deviation or a deviation indicated by the second information.

A difference between Manner 4 and Manner 3 lies in that the deviation is predefined or indicated by the second information. For example, the predefined deviation or the deviation indicated by the second information may be 1, that is, the L time offsets are consecutive integers. For example, based on the first information, the second time offset is configured as 2, and the quantity L of time offsets is configured as 3. The relay device may determine that the three time offsets are an arithmetic sequence: 2, 3, and 4 that uses the second time offset 2 as a start value and uses the predefined deviation 1 as a difference.

For example, the first information may include time offset configuration information. For example, the time offset configuration information may be denoted as Fwd-SlotOffset. For example, a format of Fwd-SlotOffset may be represented as follows:

$$\text{Fwd-SlotOffset ::= SEQUENCE } \{$$

$$\text{Fwd-InitialSlotOffset} \quad \text{INTEGER}(0.. \text{ N}_{\text{SO-max}})$$

$$\text{Fwd-NrofSlots} \quad \text{INTEGER}(0..13)$$

$$\ldots\}$$

As described above, Fwd-InitialSlotOffset indicates the second time offset, and Fwd-NrofSlots indicates the quantity L of time offsets. The relay device may determine the L time offsets based on the time offset configuration information.

Optionally, the maximum value $L_{max}$ of the quantity L of time offsets configured based on the first information may be predefined. For example, $L_{max}$ may be one of 4, 5, 8, 10, 12, 16, 20, 32, 40, 64, or 80, and the quantity L of time offsets configured based on the first information is less than or equal to $L_{max}$. Alternatively, $L_{max}$ may be related to the quantity N of relay beams configured based on the first information or a quantity M of pieces of time resource information configured based on the first information. For details, refer to the following descriptions. A value of $L_{max}$ determines a payload of the second information. Based on a limited value of $L_{max}$, the payload of the second information can be reduced.

The foregoing describes the manners of configuring the L time offsets based on the first information, and the following describes manners of configuring the N relay beams based on the first information.

For example, the first information may be configuration information used to configure a signal relay transmission resource on an access link. In this case, the N relay beams may be candidate beams that are configured by the network device for the relay device and that can be used by the relay device on the access link. In other words, the N relay beams are used for signal transmission through the access link. Alternatively, the first information may be configuration information used to configure a signal relay transmission resource on a backhaul link. In this case, the N relay beams may be candidate beams that are configured by the network device for the relay device and that can be used by the relay device on the backhaul link. In other words, the N relay beams are used for signal transmission through the backhaul link.

The first information may be used to configure at least one relay beam set corresponding to the L time offsets, and the at least one relay beam set includes the N relay beams. One time offset corresponds to one relay beam set, and one relay beam set corresponds to one or more time offsets.

In an implementation, the first information is used to configure one relay beam set corresponding to the L time offsets, and the relay beam set includes the N relay beams. The second information described below may indicate, from the relay beam set, relay beams respectively corresponding to the L time offsets. For example, the first information is specifically used to configure the signal relay transmission resource on the access link, and the relay beam set includes the N relay beams on the access link. The first information includes access link beam configuration information, the access link beam configuration information is used to configure the relay beam set, the access link beam configuration information may be denoted as Fwd-AccessBeamList, and a format of Fwd-AccessBeamList may be represented as follows: Fwd-AccessBeamList SEQUENCE (SIZE(1..maxNrofAP-Fwd-BeamPerSet)) OF Access-BeamIndex

Access-BeamIndex indicates an index of an access link beam, maxNrofAP-Fwd-BeamPerSet indicates a maximum value $N_{BeamSet-max}$ of beams included in one beam set, the access link beam configuration information indicates indexes of the N relay beams (namely, access link beams), relay beams corresponding to the N indexes are beams in the relay beam set, and the quantity N of relay beams included in the relay beam set meets $1 \le N \le N_{BeamSet-max}$. The relay device may determine, based on the first information, the N relay beams used for signal relay transmission through the access link. It should be understood that, in embodiments of this application, an example in which the solutions provided in this application are mainly applied to relay transmission resource allocation on an access link is used for description. However, this application is not limited thereto. The solutions provided in this application may be further applied to relay transmission resource allocation on a backhaul link. The second information described in S202 below includes Q indicator fields corresponding to Q relay beams, and one indicator field indicates one of the N relay beams.

For example, a quantity of bits included in one indicator field in the second information is determined based on the maximum value $N_{BeamSet-max}$ of relay beams, included in one relay beam set, that can be configured based on the first information, and the quantity of bits included in one indicator field is $\lceil \log_2 N_{BeamSet-max} \rceil$. In this specification, $\lceil \cdot \rceil$ indicates rounding up. This manner helps unify designs of indicator fields that indicate the relay beams and that are in the second information.

Further, if the quantity N of relay beams configured based on the first information meets $N < N_{BeamSet-max}$, a value corresponding to the indicator field is one of 0 *to N* - 1, and indicates a beam in the relay beam set. For example, other values of N to $2^{\lceil \log_2 N_{BeamSet-max} \rceil} - 1$ corresponding to the indicator field may not be used, or may indicate other information (for example, indicate to disable relay forwarding, or indicate to use a default relay beam for forwarding).

For another example, a quantity of bits included in one indicator field in the second information is determined based on the quantity N of relay beams configured based on the first information, and the quantity of bits included in the indicator field is $\lceil \log_2 N \rceil$. This manner helps reduce overheads of the second information.

For still another example, if the relay device supports only a single beam, the beam information may not be indicated, and a corresponding field in the second information is 1 bit or there is no beam information field (namely, 0 bits).

The network device may configure a plurality of resource sets for the relay device based on the first information, and each resource set includes a plurality of time offsets and a plurality of relay beams. The network device may activate at least two of the plurality of resource sets based on the second information. A resource set *i* in the plurality of resource sets configured based on the first information includes $L_i$ time offsets and $N_i$ relay beams. The L time resource offsets and the N relay beam sets that are configured based on the first information and that are described above may be considered as resources in one resource set. For a configuration manner of configuring another resource set based on the first information, refer to the configuration manner of the resource set. Details are not described herein again.

In this application, the resource set may be referred to as a forwarding resource set, and is used to define at least one of the following parameters (or resource patterns) of a forwarding behavior of the relay device:

a time resource, an access link beam, a backhaul link beam, an amplification gain, a reflective configuration matrix (for a reflective surface), a forwarding resource index, and a forwarding resource set index.

For example, one resource set corresponds to a plurality of forwarding resource indexes. For another example, one resource set corresponds to a plurality of time resources. For another example, one resource set corresponds to a plurality of time resource lists (or patterns), and each time resource list corresponds to a plurality of time resources. For another example, one resource set corresponds to a plurality of relay beams. For another example, one resource set corresponds to a plurality of relay beam lists (or patterns), and each relay beam list corresponds to a plurality of access links and/or a plurality of backhaul links.

For example, L time offsets in a same resource set correspond to a same relay beam set.

In another implementation, the first information is used to configure a plurality of relay beam sets corresponding to the L time offsets, one time offset corresponds to one relay beam set, and one relay beam set may correspond to one or more time offsets. The second information described below may indicate, from a relay beam set corresponding to each time offset, a relay beam respectively corresponding to the time offset. For example, the first information is used to configure the L time offsets and the plurality of relay beam sets, and the first information further indicates a relay beam set corresponding to each of the L time offsets.

The relay beam sets corresponding to the L time offsets may be different. For example, the L time offsets and L relay beam sets are configured based on the first information, and the first information indicates one of the L relay beam sets that corresponds to each of the L time offsets. The relay beam sets corresponding to the L time offsets are different, that is, the L time offsets one-to-one correspond to the L relay beam sets.

At least two of the L time offsets correspond to a same relay beam set. For example, the L time offsets and $N_{BS}$ relay beam sets are configured based on the first information, $N_{BS}$ is an integer less than L and greater than 1, and the $N_{BS}$ relay beam sets include the N relay beams in total. Both a time offset 1 and a time offset 2 in the L time offsets configured based on the first information may correspond to a same relay beam set, for example, correspond to a relay beam set 1. A time offset 3 corresponds to a relay beam set 2, and another time offset may correspond to the relay beam set 1 or the relay beam set 2, or correspond to a relay beam set other than the relay beam set 1 and the relay beam set 2. For example, $L_i$ time offsets in a same resource set correspond to X relay beam sets, and $L_i > X$. For example, the X relay beam sets cyclically correspond to the L time offsets one by one, that is, an $x^{th}$ relay beam set is used for a time offset *l,* and *l* and *x* meet $l = kX + x$, where k is an integer, $x = 0, 1, ... , X$ - 1, and $l = 0, 1, ... , L$ - 1. For another example, a manner in which X relay beam sets correspond to *L* time offsets meets the following: Identifiers *l* of a time offset corresponding to an $x^{th}$ beam set are from

$$\lfloor L/X \rfloor \cdot x \text{ } _{to} \lfloor L/X \rfloor \cdot (x+1) - 1, x = 0, 1, ..., X - 2$$, and identifiers *l* of a time offset corresponding to a relay set *X* - 1 are from $\lfloor L/X \rfloor \cdot (X - 1)$ to *L* - 1. $\lfloor \cdot \rfloor$ indicates rounding down, or may be replaced with rounding up $\lceil \cdot \rceil$. In an optional implementation, the quantity N of relay beams configured based on the first information or a maximum quantity $N_{beam-max}$ of relay beams that can be configured based on the first information is used to determine the maximum value $L_{max}$ of the quantity L of time offsets configured based on the first information, and the quantity L of time offsets configured based on the first information is less than or equal to $L_{max}$. The maximum value of L is specified, to help reduce configuration signaling overheads.

A correspondence between the quantity N of relay beams or the maximum quantity $N_{beam-max}$ and the maximum

quantity $L_{max}$ of time offsets may be predefined. The network device may determine, based on the correspondence and the quantity N of relay beams that need to be configured or the maximum quantity $N_{beam-max}$ of relay beams that can be configured, the maximum quantity $L_{max}$ of time offsets that can be configured. For example, the correspondence may be shown in Table 1a or Table 1b.

Table 1a

| $L_{max}$ | Quantity N of beams or maximum quantity $N_{beam-max}$ |
|---|---|
| $L_{max0}$ | $N_0$ |
| $L_{max1}$ | $N_1$ |
| ... | ... |

Table 1b

| Value range of L | Quantity N of beams or maximum quantity $N_{beam-max}$ |
|---|---|
| $L \leq L_{max0}$ | $N_0$ |
| $L_{max0} < L \leq L_{max1}$ | $N_1$ |
| ... | ... |

In this application, quantities and relative sequences of rows and columns in all tables may be adjusted. This is not limited in this application.

For example, the quantity N of relay beams that need to be configured by the network device is used to determine the maximum quantity $L_{max}$ of time offsets. The network device may determine, based on the quantity N of relay beams that need to be configured being equal to $N_1$, and the correspondence shown in Table 1, that the maximum quantity of time offsets that corresponds to the quantity $N_1$ of relay beams is $L_{max1}$. In this case, the network device determines that the maximum quantity $L_{max}$ of time offsets that can be configured for the relay device based on the first information is equal to $L_{max1}$, and the quantity L of time offsets configured by the network device for the relay device based on the first information is less than or equal to $L_{max1}$.

For another example, the network device may determine, based on capability information of the relay device and the like, that the maximum quantity $N_{beam-max}$ of relay beams that can be configured for the relay device based on the first information is equal to $N_0$, and the network device may determine, based on the correspondence shown in Table 1, the maximum quantity $L_{max0}$ of time offsets that corresponds to the maximum quantity $N_0$ of relay beams. The quantity L of time offsets configured by the network device for the relay device based on the first information is less than or equal to $L_{max0}$.

It should be understood that values of specific parameters in the tables provided in embodiments of this application, for example, Table 1 to Table 7 provided in embodiments of this application, may be determined based on specific implementation requirements. For example, $L_{max0}$, $L_{max1}$, ..., $N_0$, $N_1$, and the like in Table 1 may be set based on specific implementation requirements. This is not limited in this application.

Optionally, the candidate values $L_{max0}$, $L_{max1}$, and the like of $L_{max}$ shown in Table 1a and Table 1b may be in ascending order, and $N_0$, $N_1$, and the like may be in descending order. For example, $L_{max0} = 8$, and $N_0 = 32$; and $L_{max1} = 10$, and $N_1 = 16$. Alternatively, candidate values $L_{max0}$, $L_{max1}$, and the like of $L_{max}$ shown in Table 1a may be in descending order, and $N_0$, $N_1$, and the like may be in ascending order.

In another optional implementation, the quantity N of relay beams configured based on the first information or a maximum quantity $N_{beam-max}$ of relay beams that can be configured based on the first information is used to determine the quantity L of time offsets configured based on the first information.

A correspondence between the quantity N of relay beams or the maximum quantity $N_{beam-max}$ and the quantity L of time offsets that can be configured based on the first information may be predefined. The network device may determine, based on the correspondence and the quantity N of relay beams that need to be configured or the maximum quantity $N_{beam-max}$ of relay beams that can be configured, the quantity L of time offsets that can be configured based on the first information. For example, the correspondence may be shown in Table 2a or Table 2b.

Table 2a

| L | Quantity N of beams or maximum quantity $N_{beam-max}$ |
|---|---|
| $L_0$ | $N_0$ |
| $L_1$ | $N_1$ |

(continued)

| L | Quantity N of beams or maximum quantity $N_{beam-max}$ |
|---|---|
| ... | ... |

Table 2b

| Value range of L | Quantity N of beams or maximum quantity $N_{beam-max}$ |
|---|---|
| $L \leq L_0$ | $N_0$ |
| $L_0 < L \leq L_1$ | $N_1$ |
| ... | ... |

For example, the quantity N of relay beams that need to be configured by the network device is used to determine the quantity L of time offsets that can be configured based on the first information. The network device may determine, based on the quantity N of relay beams that need to be configured being equal to $N_0$, and the correspondence shown in Table 1, that the quantity of time offsets that corresponds to the quantity $N_0$ of relay beams is $L_0$. In this case, the network device determines that the quantity L of time offsets that can be configured for the relay device based on the first information is equal to $L_0$, and the network device configures $L_0$ time offsets for the relay device based on the first information.

For another example, the network device may determine, based on the capability information of the relay device and the like, that the maximum quantity $N_{beam-max}$ of relay beams that can be configured for the relay device based on the first information is equal to $N_1$, and the network device may determine, based on the correspondence shown in Table 1, the quantity $L_1$ of time offsets that corresponds to the maximum quantity $N_1$ of relay beams. The quantity L of time offsets configured by the network device for the relay device based on the first information is equal to $L_1$.

Optionally, the candidate values $L_0$, $L_1$, and the like of L shown in Table 2a and Table 2b may be in ascending order, and $N_0$, $N_1$, and the like may be in descending order. For example, $L_0 = 8$, and $N_0 = 32$; and $L_1 = 10$, and $N_1 = 16$. Alternatively, candidate values $L_0$, $L_1$, and the like of L shown in Table 2a may be in descending order, and $N_0$, $N_1$, and the like may be in ascending order.

In an optional implementation, the first information is further used to configure M time parameter groups, and one time parameter group is used to determine a time resource for signal relay transmission. Specifically, the time resource may be a time resource for signal relay transmission in a time unit corresponding to one time offset. For example, the time unit may be a slot, and the time resource may be at least one orthogonal frequency division multiplexing (orthogonal frequency division multiplexing, OFDM) symbol in the slot.

For this implementation, each of T pieces of time resource information indicated by the second information described below may include an identifier of one of the M time parameter groups. Therefore, the relay device may determine, based on the time offset, the time unit (for example, the time unit is a slot) used for signal relay transmission, and may determine, based on the time resource information, the time resource (for example, the time resource is at least one symbol) in the time unit used for signal relay transmission.

For example, one time parameter group includes an identifier of a start symbol of the time resource, and further includes a consecutive symbol number or an identifier of an end symbol of the time resource.

For example, an identifier of a start symbol included in a time parameter group configured based on the first information is 0, and the time parameter group further includes the consecutive symbol number being 3, or an identifier of an end symbol being 2. The relay device may determine, based on the time parameter group configured based on the first information, that time resources corresponding to the time parameter group are a symbol 0 to a symbol 2. The network device may configure the M time parameter groups for the relay device based on the first information, to indicate at least one of the M time parameter groups based on the second information. Therefore, the relay device may determine the time resource used for signal relay transmission.

For another example, a time parameter group includes a start and length indicator value (start and length indicator value, SLIV), and the relay device may determine a start symbol and a consecutive symbol number of the time resource based on the SLIV.

For example, the first information includes time domain resource allocation list information. For example, the time domain resource allocation information is used to configure the M time parameter groups. The time domain resource configuration list information may be denoted as Fwd-TDRAList, and may be represented as follows:
Fwd-TDRAList ::= (SIZE (1.. maxNrofFwd-TDRAs)) OF Fwd-TimeDomainResourceAllocation

maxNrofFwd-TDRAs indicates a maximum value $M_{TDRA-max}$ of a time parameter group, and athe quantity M of time parameter groups configured by the network device based on Fwd-TDRAList in the first information is greater than or equal to 1 and less than or equal to $N_{TDRA-max}$. Fwd-TDRAList specifically includes M pieces of time resource allocation information, the time resource allocation information is denoted as Fwd-TimeDomainResourceAllocation, one SLIV is configured for one piece of time resource allocation information, and Fwd-TDRAList includes the M pieces of time resource allocation information indicating different SLIVs. A format of Fwd-TimeDomainResourceAllocation may be represented as follows:

```
Fwd-TimeDomainResourceAllocation ::= SEQUENCE {
    startSymbolAndLength INTEGER (0..127)
 ...}
```

startSymbolAndLength is an SLIV, and a value of startSymbolAndLength ranges from 0 to 127. In this example, one slot includes 14 symbols. Therefore, a maximum value of the SLIV is 127. However, this application is not limited thereto. During specific implementation, the maximum value of the SLIV may be determined based on a specific quantity of symbols included in the time unit.

In an optional implementation, the quantity M of time parameter groups configured based on the first information or the maximum quantity $M_{TDRA-max}$ of time parameter groups that can be configured based on the first information is used to determine the maximum quantity $L_{max}$ of time offsets.

For example, a correspondence between the quantity M of time parameter groups or the maximum quantity $M_{TDRA-max}$ and the maximum quantity $L_{max}$ of time offsets shown in Table 3a or Table 3b may be predefined. The network device may determine, based on the quantity M of time parameter groups that need to be configured for the relay device being equal to $M_0$, that $L_{max}$, in the correspondence, corresponding to the quantity $M_0$ of time parameter groups is equal to $L_{max0}$, and determine that the quantity L of time offsets that can be configured for the relay device is less than or equal to $L_{max0}$.

For another example, the network device may determine that the maximum quantity $M_{TDRA-max}$ of time parameter groups that can be configured for the relay device is equal to $M_0$. For example, the network device may determine $M_{TDRA-max}=M_0$ based on a transmission requirement of the relay device. However, this application is not limited thereto. The network device determines, based on the maximum quantity $M_0$ of time parameter groups, that the maximum quantity $L_{max}$ of time offsets that can be configured for the relay device is equal to $L_{max0}$.

Table 3a

| $L_{max}$ | Quantity M of time parameter groups or maximum quantity $M_{TDRA-max}$ |
|---|---|
| $L_{max0}$ | $M_0$ |
| $L_{max1}$ | $M_1$ |
| ... | ... |

Table 3b

| Value range of $L_{max}$ | Quantity M of time parameter groups or maximum quantity $M_{TDRA-max}$ |
|---|---|
| $L_{max} \leq L_{max0}$ | $M_0$ |
| $L_{max0} \leq L_{max} \leq L_{max1}$ | $M_1$ |
| ... | ... |

Optionally, the candidate values $L_{max0}$, $L_{max1}$, and the like of $L_{max}$ shown in Table 3a and Table 3b may be in ascending order, and $M_0$, $M_1$, and the like may be in descending order. For example, $L_{max0} = 8$, and $M_0 = 32$; and $L_{max1} = 10$, and $M_1 = 16$. Alternatively, candidate values $L_{max0}$, $L_{max1}$, and the like of $L_{max}$ shown in Table 3b may be in descending order, and $M_0$, $M_1$, and the like may be in ascending order.

In another optional implementation, the quantity M of time parameter groups configured based on the first information or the maximum quantity $M_{TDRA-max}$ of time parameter groups that can be configured based on the first information is used to determine the quantity L of time offsets.

For example, a correspondence shown in Table 4a or Table 4b may be predefined. The network device determines, based on the correspondence shown in Table 4a or Table 4b and the quantity M of time parameter groups that need to be configured for the relay device or the maximum quantity $M_{TDRA-max}$ of time parameter groups that can be configured for the relay device, the quantity L of time offsets configured for the relay device based on the first information.

Table 4a

| L | Quantity M of time parameter groups or maximum quantity $M_{TDRA-max}$ |
|---|---|
| $L_0$ | $M_0$ |
| $L_1$ | $M_1$ |
| ... | ... |

Table 4b

| Value range of L | Quantity M of time parameter groups or maximum quantity $M_{TDRA-max}$ |
|---|---|
| $L \leq L_0$ | $M_0$ |
| $L_0 < L \leq L_1$ | $M_1$ |
| ... | ... |

Optionally, the candidate values $L_0$, $L_1$, and the like of L shown in Table 4a and Table 4b may be in ascending order, and $M_0$, $M_1$, and the like may be in descending order. For example, $L_0 = 8$, and $M_0 = 32$; and $L_1 = 10$, and $M_1 = 16$. Alternatively, candidate values $L_0$, $L_1$, and the like of L shown in Table 4a may be in descending order, and $M_0$, $M_1$, and the like may be in ascending order.

S202: The network device sends the second information to the relay device, where the second information indicates the T pieces of time resource information and the Q relay beams that correspond to the L time offsets, and T, L, and Q are positive integers.

In an implementation, the network device configures the candidate resource set based on the first information, and then indicates some or all candidate resources in the candidate resource set based on the second information, so that the relay device determines a resource for signal relay transmission and performs signal relay transmission. The candidate resource set configured based on the first information may be referred to as an aperiodic (aperiodic) resource set, and the first information may be referred to as configuration information of aperiodic resources. The second information may be aperiodic resource trigger information used to trigger signal relay transmission. In the following, a time resource and a beam that are determined by the relay device based on the first information and the second information and that are used for signal relay transmission may be referred to as aperiodic resources. In an implementation, Q is equal to L, or a length of Q needs to be determined based on L. In this manner, before the second information is received, a size of the second information (or a quantity of relay beam fields in the second information) may be determined, and no other indication information is required. Therefore, efficiency is high.

In another implementation, Q may be a preset value. Alternatively, Q may be determined based on network configuration information. For example, the network device configures a value of Q in the first information, and the relay device determines Q based on the first information, to determine the size of the second information. In this manner, configuration and indication are more flexible.

In an implementation, T is equal to Q, or a length of T needs to be determined based on Q; or T is equal to L, or a length of T needs to be determined based on L. In this manner, before the second information is received, a size of the second information (or a quantity of time resource information fields in the second information) may be determined, and no other indication information is required. Therefore, efficiency is high.

In another implementation, T may be a preset value (for example, fixed to 1, indicating that all time offsets or beams correspond to same time resource information in time). Alternatively, T may be determined based on network configuration information. For example, the network device configures a value of T in the first information, and the relay device determines T based on the first information, to determine the size of the second information. In this manner, configuration and indication are more flexible.

Correspondingly, the relay device receives the second information from the network device, and determines, based on the second information, the T pieces of time resource information and the Q relay beams that correspond to the L time offsets configured based on the first information.

For example, the second information may be downlink control information (downlink control information, DCI). For example, the first information is an RRC message. The network device pre-configures, for the relay device based on the RRC message, a candidate parameter of a transmission resource used for signal relay transmission, and then notifies, based on the DCI, the relay device of the resource parameter used for signal relay transmission. Therefore, the relay device can determine, based on two levels of information, a time resource and a beam used for signal relay transmission. For another example, the first information includes an RRC message and a medium access control (medium access control, MAC) control element (control element, CE). The network device pre-configures, for the relay device based on the RRC message, a candidate parameter set of a transmission resource used for signal relay transmission, specifies a candidate parameter subset based on the MAC CE, and notifies, based on the DCI, the relay device of the resource parameter for signal relay transmission. Therefore, the relay device can determine, based on multi-level information, a time resource and a beam for signal relay transmission.

The following first describes manners in which the second information indicates the T pieces of time resource information corresponding to the L time offsets. The manners include but are not limited to Manner A to Manner D.

Manner A: One piece of time resource information includes one time parameter group.

In Manner A, a time parameter group used to determine a time resource may not be configured based on the first information, and each of the T pieces of time resource information indicated by the second information includes one time parameter group. For example, one time parameter group may include an identifier of a start symbol of one time resource, and further include a consecutive symbol number or an identifier of an end symbol of the time resource. Alternatively, one time parameter group may be an SLIV corresponding to one time resource. The relay device may determine T time resources based on the T pieces of time resource information in the second information.

For example, the second information includes three pieces of time resource information. Time resource information 1 includes an identifier of a start symbol being 0 and a consecutive symbol number being 2, time resource information 2 includes the identifier of the start symbol being 0 and a consecutive symbol number being 3, and time resource information 3 includes an identifier of a start symbol being 3 and a consecutive symbol number being 4. The relay device may determine three time resources based on the three pieces of time resource information in the second information. A time resource determined based on the time resource information 1 includes a symbol 0 and a symbol 1, a time resource determined based on the time resource information 2 includes the symbol 0 to a symbol 2, and a time resource determined based on the time resource information 3 includes a symbol 3 to a symbol 6.

Manner B: One piece of time resource information includes an identifier of one of the M time parameter groups, and the M time parameter groups are configured based on the first information.

In Manner B, the M time parameter groups are further configured based on the first information, and each of the T pieces of time resource information indicated by the second information includes an identifier of one of the M time parameter groups. The relay device may determine, based on the T identifiers included in the T pieces of time resource information, the M time parameter groups and T time parameter groups corresponding to the T identifiers. The relay resource determines T time resources based on the T time parameter groups.

In Manner B, a quantity of bits occupied by one piece of time resource information in the second information is K, and $2^K$ is greater than or equal to M.

For example, a quantity K of bits occupied by one piece of time resource information in the second information may be determined based on the quantity M of time parameter groups configured based on the first information.

For example, $K = \lceil \log_2 M \rceil$, and M is 64. In this case, K=6, each piece of time resource information in the second information occupies 6 bits, and a quantity of bits included in the T pieces of time resource information in the second information is T×K. If T=1, the second information includes one piece of time resource information, and the quantity of bits occupied by the time resource information in the second information is K, namely, 6 bits. If T is greater than 1, for example, T=3, the T pieces of time resource information in the second information occupy T×K bits in the second information, namely, 18 bits. The quantity T of time resource information included in the second information may be predefined or configured by the network device for the relay device.

For another example, the second information may include $L_{max}$ candidate indicator fields of the time resource information, and each candidate indicator field includes $K = \lceil \log_2 M \rceil$ bits. In other words, the $L_{max}$ candidate indicator fields occupy $L_{max} \times \lceil \log_2 M \rceil$ bits in the second information in total. T candidate indicator fields included in the $L_{max}$ candidate indicator fields indicate the time resource information, and $T \leq L_{max}$. If $T < L_{max}$, an indicator field in the $L_{max}$ candidate indicator fields other than the T candidate indicator fields that indicate the time resource information may be a preset value. This is not limited in this application. The network device may determine, based on a transmission requirement, a value of the quantity T of time resource information indicated by the second information, where $1 \leq T \leq L_{max}$. This can improve indication flexibility.

For another example, the maximum quantity $M_{TDRA-max}$ of time parameter groups that can be configured based on the first information may be predefined, and the quantity K of bits occupied by one piece of time resource information in the second information meets that $2^K$ is greater than or equal to $M_{TDRA-max}$.

Manner C: One piece of time resource information includes at least one parameter in one time parameter group, one time parameter group includes a plurality of parameters, and a parameter in the plurality of parameters other than the at least one parameter indicated by the time resource information is configured based on the first information or predefined.

For example, one time parameter group includes an identifier of a start symbol and a consecutive symbol number. The identifier of the start symbol may be configured based on the first information or predefined, and each of the T pieces of time resource information indicated by the second information includes one consecutive symbol number. For example, the identifier of the start symbol configured based on the first information is 0, or the identifier of the start symbol is predefined as 0, and the second information indicates four pieces of time resource information. The four pieces of time resource information include four consecutive symbol numbers. For example, the four consecutive symbol numbers are: 4, 2, 3, and 6. The relay device may determine, based on the identifier of the start symbol being 0 and the four consecutive symbol numbers, that four time resources are: a symbol 0 to a symbol 3, the symbol 0 and a symbol 1, the symbol 0 to the symbol 3, and the symbol 0 to a symbol 5. Optionally, two or more of the four consecutive symbol numbers indicated by the second information may be the same, and the same two consecutive symbol numbers correspond to different time offsets.

Optionally, the first information may be used to configure an identifier of a start symbol corresponding to each of the L time offsets. In S203 in the following, the relay device may determine a time resource based on a time offset, an identifier of a start symbol corresponding to the time offset in the first information, and a consecutive symbol number in time resource information corresponding to the time offset in the second information.

For example, the first information may include slot offset start symbol list information, the slot offset start symbol list information may be denoted as Fwd-SlotOffsetStartSymbolList, and a format of Fwd-SlotOffsetStartSymbolList may be represented as follows:

```
        Fwd-SlotOffsetStartSymbolList ::= SEQUENCE (SIZE(1..maxNrofFwd-OffsetStarts))
   OF Fwd-SlotOffsetStartSymbol
```

As described above, the network device may configure L pieces of time offset and start symbol information (namely, Fwd-SlotOffsetStartSymbol) based on Fwd-SlotOffsetStartSymbolList, and maxNrofFwd-OffsetStarts is $L_{max}$. Each Fwd-SlotOffsetStartSymbol includes one time offset and an identifier of a start symbol corresponding to the time offset. For example, a format of Fwd-SlotOffsetStartSymbol may be represented as follows:

$$\text{Fwd-SlotOffsetStartSymbol} ::= \text{SEQUENCE} \{$$

$$\text{Fwd-SlotOffset} \quad \text{INTEGER}(0..32)$$

$$\text{Fwd-StartSymbol} \quad \text{INTEGER}(0..13)$$

$$\ldots\}$$

Fwd-SlotOffset is the time offset, and a value of Fwd-SlotOffset is an integer ranging from 0 to 32. Fwd-StartSymbol is the identifier of the start symbol, and a value of Fwd-StartSymbol is an integer ranging from 0 to 13. Herein, an example in which the maximum value of the time offset is 32 and the maximum value of the identifier of the start symbol is 13 is used for description. However, this application is not limited thereto, and a corresponding maximum value may be set based on a specific implementation requirement.

For another example, one time parameter group includes an identifier of a start symbol and a consecutive symbol number. The consecutive symbol number may be configured based on the first information or predefined, and each of the T pieces of time resource information indicated by the second information includes an identifier of one start symbol. For example, the consecutive symbol number configured based on the first information may be 8, or the predefined consecutive symbol number may be 8. The second information indicates the T pieces of time resource information, the T pieces of time resource information include identifiers of T start symbols, and the relay device may determine T time resources based on the identifiers of the T start symbols and the consecutive symbol number. Optionally, two or more of the identifiers of T start symbols indicated by the second information may be the same, and the same identifiers of the two start symbols correspond to different time offsets. For details, refer to S203.

Optionally, in Manner A to Manner C, the quantity K of bits occupied by one piece of time resource information in the second information may be predefined. For example, K may be predefined as 4 or 7. This is not limited in this application.

Manner D: The first information is further used to configure time resource information corresponding to each of the N relay beams, the T pieces of time resource information are time resource information that corresponds to the Q relay beams indicated by the second information, T is equal to Q, one piece of time resource information includes one time parameter group, and one time parameter group is used to determine at least one time resource.

In other words, the network device configures, based on the first information, the N relay beams and the time resource information corresponding to each of the N relay beams. The second information sent by the network device indicates the Q relay beams in the N relay beams. After receiving the second information, the relay device may determine, based on the first information, time resource information respectively corresponding to the Q relay beams, that is, the second information implicitly indicates, by indicating the Q relay beams, the Q pieces of time resource information corresponding to the Q relay beams. Each piece of time resource information includes one time resource group used to determine a time resource. For each of the Q relay beams, the relay device may determine to perform signal relay transmission via the relay beam and a time resource determined based on the time resource information corresponding to the relay beam.

For example, the first information may include relay beam and time resource configuration information, one piece of relay beam and time resource information is used to configure one relay beam and time resource information corresponding to the relay beam, and the relay beam and time resource configuration information may be denoted as Fwd-AccessBeamAndTimeResource. A format of Fwd-AccessBeamAndTimeResource may be represented as follows:

$$\text{Fwd-AccessBeamAndTimeResource} ::= \text{SEQUENCE} \{$$

$$\text{Access-BeamIndex} := \text{INTEGER} (0..N_{BI\text{-}max})$$

$$\text{startSymbolAndLength} \qquad\qquad \text{INTEGER} (0..127)$$

$$...\}$$

Access-BeamIndex is an index of the relay beam, and $N_{BI\text{-}max}$ is a maximum value of the index of the relay beam. For example, $N_{BI\text{-}max}$ may be 63, that is, indexes of beams that may be configured are 0 to 63, and there are 64 optional index values in total. However, this application is not limited thereto. startSymbolAndLength is time resource information, and a time parameter group included in the time resource information is an SLIV. Alternatively, the time resource information may further include an identifier of a start symbol, and a consecutive symbol number or an identifier of an end symbol. For example, the N relay beams configured by the network device for the relay device based on the first information include a relay beam 1, an SLIV 1 corresponding to the relay beam 1 is configured based on the first information, and the L relay beams in the N relay beams indicated by the network device based on the second information include the relay beam 1. The relay device determines, based on the first information, that the relay beam 1 corresponds to the SLIV 1, determines a corresponding time resource based on the SLIV 1 and a corresponding time offset, and performs signal relay transmission via the relay beam 1 and the time resource.

In an implementation, the quantity N of relay beams configured based on the first information or the maximum quantity $N_{beam\text{-}max}$ of relay beams that can be configured for the relay device based on the first information is used to determine the quantity T of time resource information indicated by the second information or the maximum quantity $T_{max}$.

For example, the quantity N of relay beams configured based on the first information or the maximum quantity $N_{beam\text{-}max}$ of relay beams that can be configured based on the first information for the relay device is used to determine the quantity T of time resource information indicated by the second information. For example, a correspondence shown in Table 5 may be predefined. The network device and the relay device may determine the quantity T of time resource information in the second information based on the correspondence shown in Table 5 and the quantity N of relay beams configured based on the first information or the maximum quantity $N_{beam\text{-}max}$ of relay beams that can be configured based on the first information for the relay device.

Table 5

| T | Quantity N of beams or maximum quantity $N_{beam\text{-}max}$ |
|---|---|
| $T_0$ | $N_0$ |
| $T_1$ | $N_1$ |
| ... | ... |

Optionally, the candidate values $T_0$, $T_1$, and the like of T shown in Table 5 may be in ascending order, and $N_0$, $N_1$, and the like may be in descending order. For example, $T_0 = 1$, and $N_0 = 32$; and $L_1 = 8$, and $N_1 = 8$. Alternatively, candidate values $T_0$, $T_1$, and the like shown in Table 5 or Table 6 may be in descending order, and $N_0$, $N_1$, and the like may be in ascending order.

For example, the quantity N of relay beams configured based on the first information or the maximum quantity $N_{beam\text{-}max}$ of relay beams that can be configured based on the first information for the relay device is used to determine the maximum quantity $T_{max}$ of time resource information indicated by the second information. For example, a correspondence shown in Table 6 may be predefined. The network device may determine the maximum quantity $T_{max}$ of time resource information in the second information based on the correspondence shown in Table 5 and the quantity N of relay beams configured based on the first information or the maximum quantity $N_{beam\text{-}max}$ of relay beams that can be configured based on the first information for the relay device. The network device determines the quantity T of time resource information in the second information based on the maximum quantity $T_{max}$, where $T \leq T_{max}$. For example, the network device may configure the quantity T of time resource information in the second information for the relay device based on the first information. Correspondingly, the relay device determines the quantity T of time resource information in the second information based on the first information.

Table 6

| $T_{max}$ | Quantity N of beams or maximum quantity $N_{beam-max}$ |
|---|---|
| $T_{max0}$ | $N_0$ |
| $T_{max1}$ | $N_1$ |
| ... | ... |

Optionally, the candidate values $T_{max0}$, $T_{max1}$, and the like of T shown in Table 5 is in ascending order, and $N_0$, $N_1$, and the like is in descending order. For example, $T_{max0} = 1$, and $N_0 = 32$; and $T_{max1} = 8$, and $N_1 = 8$. Alternatively, candidate values $T_{max0}$, $T_{max1}$, and the like shown in Table 5 or Table 6 is in descending order, and $N_0$, $N_1$, and the like is in ascending order.

In another implementation, the first information is further used to configure the M time parameter groups, the time parameter group is used to determine a time resource, the quantity M of time parameter groups configured based on the first information or the maximum quantity $M_{TDRA-max}$ of time parameter groups that can be configured based on the first information is used to determine the maximum quantity $T_{max}$ of time resource information indicated by the second information, and the quantity T of time resource information indicated by the second information is less than $T_{max}$.

For example, a correspondence shown in Table 7 may be predefined. The network device may determine, based on the correspondence shown in Table 7 and the quantity M of time parameter groups configured based on the first information or the maximum quantity $M_{TDRA-max}$ of time parameter groups that can be configured based on the first information for the relay device, the quantity T of time resource information in the second information or the maximum quantity $T_{max}$.

Table 7

| T or $T_{max}$ | Quantity M of time parameter groups or maximum quantity $M_{TDRA-max}$ |
|---|---|
| $T_0$ | $M_0$ |
| $T_1$ | $M_1$ |
| ... | ... |

Optionally, the candidate values $T_0$, $T_1$, and the like of T shown in Table 7 is in ascending order, and $M_0$, $M_1$, and the like is in descending order. For example, $T_0 = 1$, and $M_0 = 32$; and $T_1 = 8$, and $M_1 = 8$. Alternatively, candidate values $T_0$, $T_1$, and the like shown in Table 7 is in descending order, and $M_0$, $M_1$, and the like is in ascending order.

In an optional implementation, the first information is used to configure R parameter group sets, a parameter group set $i$ includes $L_i$ parameter groups, R is greater than or equal to 1, and $i$=0, 1, 2, ..., and R-1. A parameter group $j$ in the $L_i$ parameter groups includes one time offset and one time parameter group, where $j$=0, 1, 2, ..., and $L_i$-1. The second information indicates one piece of time resource information, that is, T=1, and the time resource information includes identifiers of one of the R parameter group sets.

For example, Table 7a schematically shows parameter groups included in a parameter group set $i$ in the R parameter group sets configured based on the first information, and the parameter group set $i$ includes $L_i$ parameter groups, identifiers $j$ of the $L_i$ parameter groups are: 0, 1, 2, ..., and $L_i$-1. For example, the time parameter group is an SLIV, an $SLIV_j$ indicates a value of a time parameter group in the parameter group $j$, and $N_j^{TU}$ indicates a value of a time offset in the parameter group $j$. For example, a time offset included in a parameter group 0 in the parameter group set $i$ is $N_0^{TU}$, and a time parameter group is an $SLIV_0$. A time offset included in a parameter group 1 is $N_1^{TU}$, and a time parameter group is an $SLIV_1$. In addition, a time offset included in the parameter group $L_i$-1 is $N_{L_i-1}^{TU}$, and a time parameter group is $SLIV_{L_i}$-1.

Table 7a

| Parameter group set $i$ | | |
|---|---|---|
| Identifier $j$ of a parameter group | Time offset | Time parameter group |
| 0 | $N_0^{TU}$ | $SLIV_0$ |
| 1 | $N_1^{TU}$ | $SLIV_1$ |
| 2 | $N_2^{TU}$ | $SLIV_2$ |
| ... | ... | ... |
| $L_i$-1 | $N_{L_i-1}^{TU}$ | $SLIV_{L_i}$-1 |

The network device configures the R parameter group sets for the relay device based on the first information, and the relay device determines, based on the first information, a plurality of parameter groups included in each of the R parameter group sets. The network device sends the second information to the relay device, the second information indicates one piece of time resource information, and the time resource information includes the identifiers of one of the R parameter group sets. For example, the time resource information includes an identifier $i$ of the parameter group set, and the relay device may determine, based on the first information, $L_i$ time offsets and $L_i$ SLIVs that are included in the parameter group set. In this implementation, T=1, and a quantity of bits occupied by the time resource information in the second information is $\lceil \log_2 R \rceil$.

In another optional implementation, the first information is used to configure one parameter group set, the parameter group set includes W parameter groups, and one parameter group includes one time offset and one time parameter group. The second information indicates L pieces of time resource information, and each of the L pieces of time resource information includes an identifier of one time parameter group. The second information indicates L parameter groups in the W parameter groups based on the L pieces of time resource information. The relay device determines, based on a time offset in one parameter group, a time unit corresponding to the time offset, and determines, based on a time parameter group in the parameter group, a time resource used for signal relay transmission in the time unit.

In this implementation, T=L, a quantity of bits occupied by one piece of time resource information in the second information is $\lceil \log_2 W \rceil$, and the L pieces of time resource information occupy $L \times \lceil \log_2 W \rceil$ bits in the second information in total.

Alternatively, a quantity of bits occupied by one piece of time resource information in the second information is a larger value in 1 and $\lceil \log_2 W \rceil$, $\max\{\lceil \log_2 W \rceil, 1\}$, and the L pieces of time resource information occupy $L \times \max\{\lceil \log_2 W \rceil, 1\}$ bits in the second information in total. In other words, a minimum length of the time resource information field is limited. For example, the minimum length is 1 bit.

In some other embodiments, identifiers of parameter groups in one parameter group set may be consecutive or inconsecutive. Alternatively, identifiers of parameter groups may start from 0 or another value. In this case, a quantity W of time resources in the parameter group set cannot correspond to a maximum value of the identifiers of the parameter groups in the parameter group set. In other words, a quantity of bits occupied by the time resource information determined based on the quantity W cannot indicate a parameter group corresponding to the largest identifier in the parameter group.

In an implementation, the identifiers of the parameter groups start from 1, a quantity of bits occupied by one piece of time resource information in the second information is $\lceil \log_2 I_p \rceil$, $I_p$ is the maximum value of the identifiers of the parameter groups in the parameter group set, and the L pieces of time resource information occupy $L \times \lceil \log_2 I_p \rceil$ bits in the second information in total.

Alternatively, a quantity of bits occupied by one piece of time resource information in the second information is a larger value in 1 and $\lceil \log_2 I_p \rceil$, $\max\{\lceil \log_2 I_p \rceil, 1\}$, and the L pieces of time resource information occupy $L \times \max\{\lceil \log_2 I_p \rceil, 1\}$ bits in the second information in total. In other words, a minimum length of the time resource information field is limited. For example, the minimum length is 1 bit.

In another implementation, the identifiers of the parameter groups start from 0, a quantity of bits occupied by one piece of time resource information in the second information is $\lceil \log_2 I_p + 1 \rceil$, $I_p$ is the maximum value of the identifiers of the parameter groups in the parameter group set, and the L pieces of time resource information occupy $L \times \lceil \log_2 I_p + 1 \rceil$ bits in the second information in total.

Alternatively, a quantity of bits occupied by one piece of time resource information in the second information is a larger value in 1 and $\lceil \log_2 I_p + 1 \rceil$, $\max\{\lceil \log_2 I_p + 1 \rceil, 1\}$, and the L pieces of time resource information occupy $L \times \max\{\lceil \log_2 I_p + 1 \rceil, 1\}$ bits in the second information in total. In other words, a minimum length of the time resource information field is limited. For example, the minimum length is 1 bit.

Optionally, the second information may include $L_{max}$ candidate indicator fields of the time resource information, and each candidate indicator field includes $K = \lceil \log_2 W \rceil$ bits. In other words, the $L_{max}$ candidate indicator fields occupy $L_{max} \times \lceil \log_2 W \rceil$ bits in the second information in total. L candidate indicator fields included in the $L_{max}$ candidate indicator fields indicate the time resource information, and $L \leq L_{max}$. If $L < L_{max}$, an indicator field in the $L_{max}$ candidate indicator fields other than the T candidate indicator fields that indicate the time resource information may be a preset value. This is not limited in this application. The network device may determine, based on a transmission requirement, a value of the quantity T of time resource information indicated by the second information, where $1 \leq L \leq L_{max}$. This can improve indication flexibility.

The following describes a manner in which the second information indicates the Q relay beams corresponding to the L time offsets.

In an implementation, if one relay beam set corresponding to L time offsets is configured based on the first information, and the relay beam set includes the N relay beams, the second information may indicate the Q relay beams in the relay beam set. If Q=L, the L time offsets one-to-one correspond to the L relay beams. If Q is less than L, first Q time offsets in the L time offsets sequentially correspond to the Q relay beams, or the L time offsets sequentially and cyclically correspond to the Q relay beams.

For example, a relay beam q corresponds to a time offset l, and l and q meets l = kQ + x, where k is an integer, q = 0, 1, ..., Q - 1, and l = 0, 1, ... , L - 1.

For another example, a manner in which Q relay beams and L time offsets meet the following: Identifiers l of the time offset corresponding to the relay beam q are from $\lfloor L/Q \rfloor \cdot q$ to $\lfloor L/Q \rfloor \cdot (q + 1) - 1$, where q = 0, 1, ... , Q - 2.

Identifiers l of a time offset corresponding to a relay beam Q - 1 are from $\lfloor L/Q \rfloor \cdot (Q - 1)$ to L - 1. $\lfloor \cdot \rfloor$ indicates rounding down, or may be replaced with rounding up $\lceil \cdot \rceil$.

In another implementation, if the first information is used to configure a plurality of relay beam sets corresponding to the L time offsets, one time offset corresponds to one of the plurality of relay beam sets, a first relay beam that is indicated by the second information and that corresponds to a first time offset is a relay beam in the relay beam set corresponding to the first time offset, the first time offset is one of the L time offsets, and the first relay beam is one of the L relay beams. In this implementation, Q is equal to L.

A manner in which the second information indicates a beam corresponding to another time offset is the same as the manner in which the second information indicates the first relay beam corresponding to the first time offset, that is, the first time offset is any one of the L time offsets. In addition, two or more of the L time offsets may correspond to a same relay beam set. This is not limited in this application.

For example, the first information is used to configure three time offsets and a plurality of relay beam sets corresponding to the three time offsets. A relay beam 1 that is indicated by the second information and that corresponds to a time offset 1 is a relay beam in the relay beam set corresponding to the time offset 1, a relay beam 2 corresponding to a time offset 2 is a relay beam in the relay beam set corresponding to the time offset 2, and a relay beam 3 corresponding to a time offset 3 is a relay beam in the relay beam set corresponding to the time offset 3.

S203: The relay device determines, based on the first information and the second information, J relay beams corresponding to J time resources, and determines the J relay beams corresponding to the J time resources.

J is equal to L, or J is equal to Q.

In an implementation, J=L, and the relay device determines L time resources in L time units based on the L time offsets configured based on the first information and the T pieces of time resource information indicated by the second information. If Q is less than L, the relay device may determine that the L time offsets configured based on the first information sequentially and cyclically correspond to the Q relay beams indicated by the second information, and may determine L relay beams corresponding to the L time offsets. At least two of the L time offsets correspond to a same relay beam. If Q is equal to L, the L time offsets one-to-one correspond to the L relay beams. A relay beam corresponding to one time resource determined by the relay device based on one time offset is a relay beam corresponding to the time offset. One of the L time offsets configured based on the first information is used to determine one of the L time units, and time resource information that is indicated by the second information and that corresponds to the time offset is used to determine a time resource in the time unit. The relay device may determine the L time resources in the L time units based on a time unit (denoted as a second time unit) in which the second information is located, the L time offsets configured based on the first information, and the T pieces of time resource information that are indicated by the second information and that correspond to the L time offsets.

T is less than or equal to L. When T is equal to L, the L pieces of time resource information indicated by the second information one-to-one correspond to the L time offsets configured based on the first information. The relay device may determine, based on a sequence of the L time offsets configured based on the first information and a sequence of the L pieces of time resource information indicated by the second information, that the L pieces of time resource information sequentially correspond to the L time offsets.

When T is less than L, the relay device may determine a correspondence between the L time offsets and the T pieces of time resource information based on a predefined correspondence manner.

For example, T=1, that is, the second information indicates one piece of time resource information, and the L time offsets all correspond to the time resource information. In other words, time resources in different time units in the L time units determined by the relay device based on the L time offsets include same symbols, that is, both are symbols indicated by one piece of time resource information in the second information. For example, five time offsets are configured based on the first information, and one piece of time resource information indicated by the second information includes a time resource in which a start symbol is a symbol 2 and a consecutive symbol number is 7, which are indicated by an SLIV. In other words, the time resource includes the symbol 2 to a symbol 8. In this case, after receiving the second information, the relay device may determine that the symbol 2 to the symbol 8 in each of the L time units determined based on the L time offsets are a time resource used for signal relay transmission.

For another example, T is less than L, and the L time offsets sequentially and cyclically correspond to the T pieces of time resource information. For example, as shown in FIG. 3, the first information is used to configure five time offsets in total: a time offset 0 to a time offset 4, and L=5. The second information indicates two pieces of time resource information in total: time resource information 1 and time resource information 2, and T=2. The five time offsets, in a configuration sequence of the first information, cyclically correspond to the two pieces of time resource information based on an indication sequence of the second information, that is, time resource information $t$ corresponding to a time offset $l$ meets the following:

$$t = l \bmod \mathrm{T}$$

mod indicates a modulo operation. In this case, the relay device may determine that the time offset 0 corresponds to time resource information 0, and a time offset 1 corresponds to the time resource information 1. Then, a next time offset cyclically correspond to the time resource information 0, that is, a time offset 2 corresponds to the time resource information 0, a time offset 3 corresponds to the time resource information 1, and the time resource information 4 corresponds to the time resource information 0. The relay device may determine a time unit based on the second time unit in which the second information is located and the time offset 0, and then determine a time resource in the time unit based on the time resource information 0 corresponding to the time offset 0. In addition, the relay device determines L-1 time resources in L-1 time units based on another time offset and corresponding time resource information.

For still another example, in the L time offsets, every P consecutive time offsets correspond to one piece of time resource information in a sequence of arrangement, where P is an integer determined based on L and T. For example, as shown in FIG. 4, the first information is used to configure five time offsets in total: a time offset 0 to a time offset 4, and L=5. The second information indicates two pieces of time resource information in total: time resource information 0 and time resource information 1, and T=2. For example, it may be specified that P meets the following:

$$\mathrm{P} = \left\lceil \frac{\mathrm{L}}{\mathrm{T}} \right\rceil$$

In other words, P is obtained by rounding up a ratio of L to T. In the example shown in FIG. 4, P=3, and in the five time offsets, every three consecutive time offsets correspond to one piece of time resource information. In other words, the three consecutive time offsets from the time offset 0 to a time offset 2 correspond to the time resource information 0, a quantity of remaining time offsets is less than 3, and the remaining time offset 3 and time offset 4 correspond to the time resource information 1.

In another implementation, J=Q, and the relay device determines Q time resources in Q time units based on the L time offsets configured based on the first information and the T pieces of time resource information indicated by the second information. If Q is less than L, the relay device may determine, based on the correspondence between the Q relay beams and the L time offsets described above, the Q time offsets corresponding to the Q relay beams, or determine first Q (or last Q) time offsets in the L time offsets configured based on the first information, and determine the Q time units based on the Q time offsets. A correspondence between the T pieces of time resource information and the Q time offsets may be determined in a similar manner as a manner of determining the correspondence between the T pieces of time resource information and the L time offsets. For brevity, details are not described herein again. The relay device determines the Q time resources in the Q time units based on the Q pieces of time resource information corresponding to the Q time offsets.

S204: The relay device forwards a signal from the network device or a signal from a terminal device via the J relay beams and the J time resources.

In an implementation, J=L, and the relay device determines the L time units based on the second time unit in which the second information is located and the L time offsets configured based on the first information, and determines the L time resource in the L time units based on the T pieces of time resource information corresponding to the L time offsets. Then, the relay device determines, based on the Q relay beams indicated by the second information, the L relay beams corresponding to the L time resources, that is, determines a relay beam that corresponds to each of the L time resources and that is used for signal relay transmission. The L relay beams sequentially correspond to the L time resources. The relay device performs signal relay transmission via corresponding relay beams and the L time resources in the L time units.

In another implementation, J=Q, and the relay device determines, based on the first information and the second information, the Q time resources in the Q time units and the Q relay beams corresponding to the Q time resources, and performs signal relay transmission via the corresponding relay beams and the Q time resources in the Q time units.

To better understand the solutions of this application, the following describes the solutions provided in embodiments of this application by using an example in which the first information is an RRC message, the second information is DCI, and the time unit is a slot with reference to the accompanying drawings. It should be understood that this application is not limited thereto. The following uses an example in which J=L and the relay device performs signal relay forwarding via the L relay beams and the L time resources for description. When J=Q, implementation may be performed based on the following examples and the correspondence between the time offset, the time resource information, and the relay beam described above. For brevity, details are not described herein.

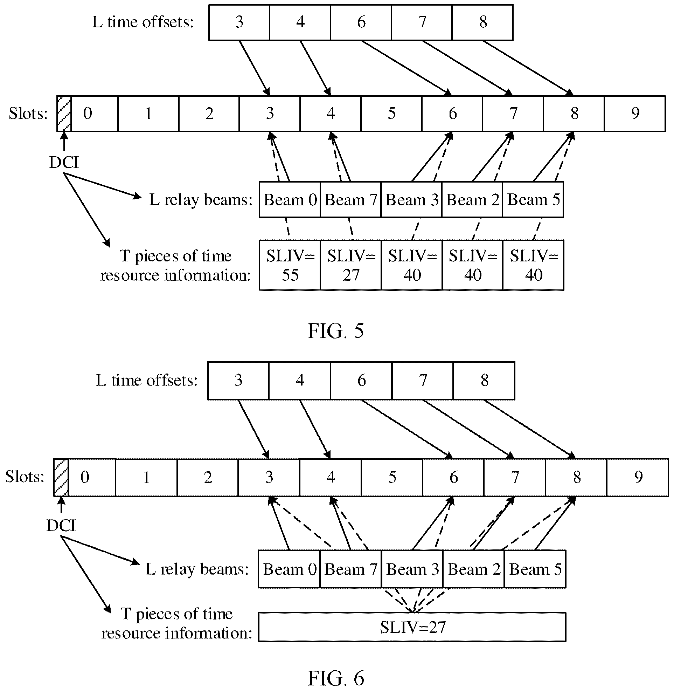

Example 1: As shown in FIG. 5, the network device configures five time offsets and the N relay beams for the relay device based on the RRC message, and the five time offsets are: 3, 5, 6, 7, and 8, that is, L=5. In addition, the network device sends the DCI to the relay device in a slot 0, and the DCI indicates five relay beams in the N relay beams: beams 0, 7, 3, 2, and 5. The DCI further indicates five pieces of time resource information, and SLIVs included in the five pieces of time resource information are: 55, 27, 40, 40, and 40, that is, T=L in this example. The five relay beams and the five pieces of time resource information, in a sequence in the DCI, that are indicated by the DCI sequentially correspond to the five time offsets configured by the network device in a sequence in the first information. After receiving the second information, the relay device may determine five slots based on the slot 0 (namely, an example of the second time unit) in which the second information is located and the five time offsets configured based on the first information. The five slots for signal relay transmission in the five slots are: slots 3, 4, 6, 7, and 8, and relay beams corresponding to the five slots are: the beams 0, 7, 3, 2, and 5. In addition, the relay device may determine that time resource information corresponding to the slot 0 is SLIV=55, where SLIV=55 indicates that a start symbol is a symbol 0 and a consecutive symbol number is 12, that is, the relay device may determine that a time resource in the slot 3 is 12 symbols in total from the symbol 0 to a symbol 11. Similarly, the relay device may determine that time resource information corresponding to the slot 4 is SLIV=27, and determine a time resource in a slot 1 based on SLIV=27. The relay device may further determine time resources in the other three slots. After determining the five time resources in the five slots and the corresponding relay beams, the relay device performs signal relay transmission via a time resource in each slot and the corresponding relay beam. For example, the relay device performs signal relay transmission via the beam 0 on the symbol 0 to the symbol 11 in the slot 3, and performs signal relay transmission via the beam 7, the beam 3, the beam 3, and the beam 5 and corresponding time resources in the slot 4, the slot 6, the slot 7, and the slot 8.

For example, the five time resources determined by the relay device are access link resources, and the five beams are access link relay beams. The relay device respectively forwards signals from the network device to the terminal device via the five relay beams and the five time resources. Alternatively, the five time resources are backhaul link resources, and the five beams are backhaul link relay beams. The relay device respectively forwards signals from the terminal device to the network device via the five relay beams and the five time resources. It should be noted that the signals for relay transmission performed by the relay device via the five time resources may be signals of a same terminal device, or signals for relay transmission performed via the five time resources include signals of different terminal devices. This is limited in this application.

Example 2: A difference between Example 2 and Example 1 lies in that the quantity of time resource information indicated by the DCI is 1. An SLIV included in the time resource information in the DCI is 27, and SLIV=27 indicates that a start symbol is a symbol 0 and a consecutive symbol number is 14, that is, a symbol 0 to a symbol 13. The relay device may determine that the symbol 0 to the symbol 13 in each of the five slots are used for signal relay transmission.

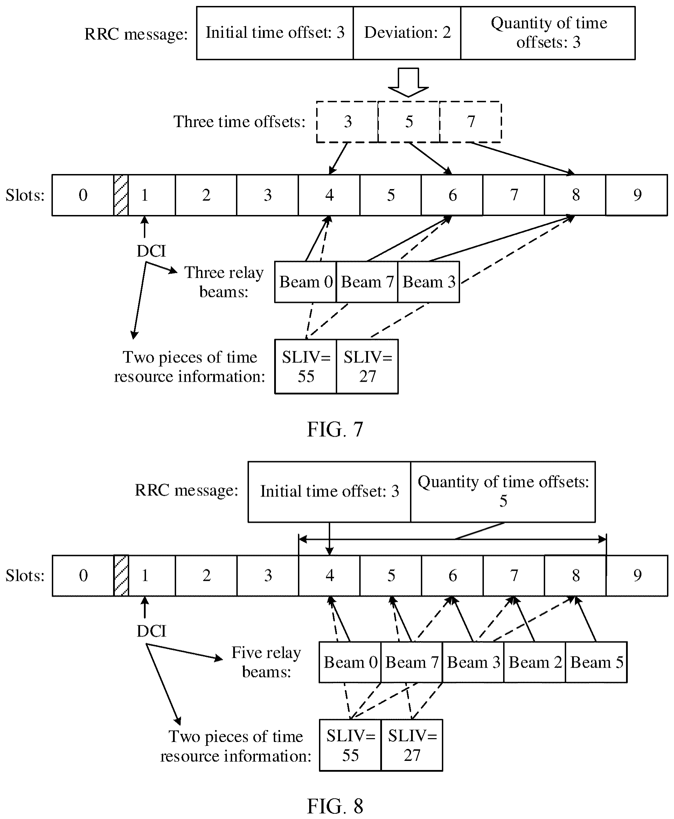

Example 3: The network device configures the L time offsets for the relay device in Manner 3 described in S201, the RRC message includes the initial time offset in the L time offsets, one deviation, and the quantity L of time offsets, and the L time offsets are an arithmetic sequence that uses the initial time offset as a start value and uses the deviation as a difference, that is, the RRC message implicitly indicates the L time offsets. In this example, as shown in FIG. 7, a 1st offset included in the RRC message is 3, the deviation is 2, and the quantity L of time offsets is 3. In this case, the relay device may determine that the three time offsets are an arithmetic sequence with an initial value of 3 and a difference of 2, that is, 3, 5, and 7. The relay device may determine, based on a slot 1 in which the DCI is located and the three time offsets, three slots used for signal relay transmission, are respectively slots 4, 6, and 8 that are offset by three slots, five slots, and seven slots relative to the slot 1. Alternatively, the relay device may determine the slot 4 based on the initial time offset, and consider that the deviation in the RRC message is a quantity of offset slots between adjacent slots, and the quantity of time offsets is the quantity of slots. The relay device may determine the slot 6 that is offset by two slots relative to the slot 4 and a slot 8 that is offset by two slots relative to the slot 6. In Example 3, the DCI indicates two pieces of time resource information, and SLIVs included in the two pieces of time resource information are: 55 and 27. For example, it is predefined that when T is less than L, every P time offsets correspond to one piece of time resource information, where $P = \lceil L/T \rceil = 2$. In this case, the relay device may determine that SLIVs corresponding to the slots 4 and 6 are 55, time resources in the slots 4 and 6 are a symbol 0 to a symbol 11 that are indicated by SLIV=55, the slot 8 corresponds to SLIV=27, and time resources in the slot 8 is the symbol 0 to a symbol 13 that are indicated by SLIV=27.

Example 4: The network device configures the L time offsets for the relay device in Manner 4 described in S201, that is, the RRC message includes the initial time offset in the L time offsets and the quantity L of time offsets, and the L time offsets are an arithmetic sequence that uses the initial time offset as a start value and uses the predefined deviation as a difference, that is, the RRC message implicitly indicates the L time offsets. In this example, as shown in FIG. 8, the initial time offset configured based on RRC is 3, the quantity L of time offsets is 5, and the predefined deviation is 1. The quantity of time offsets in the RRC message may be considered as a consecutive slot number. The network device sends the DCI to the relay device in a slot 1. The relay device may determine, based on the slot 1 in which the DCI is located and the initial time offset 3, that an initial slot in the five slots is a slot 4 that is offset by three slots relative to the slot 1. The relay device determines, based on L=5, that, the five slots are five slots whose start slot is the slot 4, namely, the slot 4 to a slot 8. Alternatively, the relay device may determine, based on a 1st offset is 3 and a slot offset number is 5, that the five slot offsets are 3 to 7, to determine, based on the five slot offsets, that the five slots are the slot 4 to the slot 8. This is not limited in this application. In Example 4, the DCI indicates two pieces of time resource information, and SLIVs included in the two pieces of time resource information are: 55 and 27. For example, it is predefined that when T is less than L, the L time offsets sequentially and cyclically correspond to the T pieces of time resource information. In this case, the relay device may determine that time resources in the slots 4, 6, and 8 are a symbol 0 to a symbol 11 that are indicated by SLIV=55, and time resources in the slots 5 and 7 are the symbol 0 to a symbol 13 that are indicated by SLIV=27.

In an implementation, the L time offsets include at least two time offsets with equal values, the at least two time offsets correspond to a same time unit, and the time resource information corresponding to the at least two time offsets is used to determine different time resources in the same time unit.

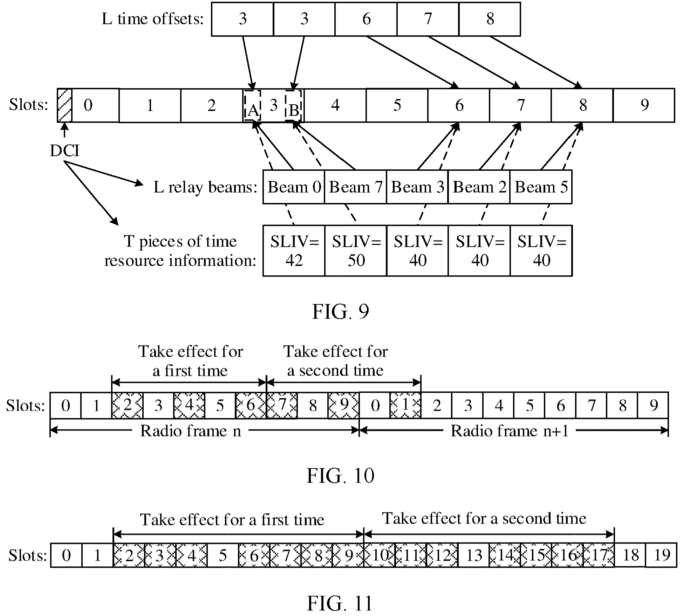

For example, as shown in FIG. 9, the network device configures five time offsets based on the RRC message, which are: 3, 3, 6, 7, and 8. First two time offsets are the same and are both 3. The relay device may determine that the two time offsets indicate a same slot. After receiving the DCI in a slot 0, the relay device may determine that the slot 3 that is offset by three slots relative to the slot 0 includes two time resources. The five relay beams and the five pieces of time resource information that are indicated by the DCI sent by the network device sequentially correspond to the five time offsets in the first information. In this case, the relay device may determine that a 1st time offset corresponds to a 1st piece of time resource information (that is, SLIV=42) and a 1st relay beam (that is, a beam 0). The relay device may determine that a 1st time resource in the slot 3 is a symbol 0 to a symbol 3, that are indicated by SLIV=42, with a start symbol being the symbol 0 and a consecutive symbol number being 4. In other words, a time resource A shown in FIG. 9 includes the symbol 0 to the symbol 3. The relay device performs signal relay transmission via the beam 0 on the symbol 0 to the symbol 3 in the slot 3. In addition, the relay device may determine that a 2nd time offset corresponds to a 2nd piece of time resource information (that is, SLIV=50) and the 1st relay beam (that is, a beam 7). The relay device may determine that a 2nd time resource in the slot 3 is a symbol 8 to a symbol 11, that are indicated by SLIV=50, with a start symbol being the symbol 8 and a consecutive symbol number being 4. In other words, a time resource B shown in FIG. 9 includes the symbol 8 to the symbol 11. The relay device performs signal relay transmission via the beam 7 on the symbol 8 to the symbol 11 in the slot 3. For determining, by the relay device, another time resource and a corresponding beam, refer to the descriptions in the foregoing examples. Details are not described herein again.

A subcarrier spacing of a transmission resource (that is, a resource carrying the second information) used by the relay device to receive the second information may be different from a subcarrier spacing of a resource used by the relay device to perform signal relay transmission. For example, an identifier of a subcarrier spacing of a backhaul link resource used to transmit the second information between the network device and the relay device is $\mu_{PDCCH}$, a resource used by the relay device to perform signal relay transmission is an access link resource between the relay device and the terminal device, and an identifier of a subcarrier spacing of the access link resource is $\mu_{Fwd}$, where $\mu_{PDCCH} \neq \mu_{Fwd}$. The relay device needs to determine, based on a time unit $n_{MT}$, in the backhaul link resource, in which the second information is located, a second time unit, in the access link resource, in which the second information is located. For example, an identifier of the second time unit is $n_{Fwd}$. In this case, the second time unit meets the following:

$$n_{\mathrm{Fwd}} = \lfloor n_{\mathrm{MT}} \cdot 2^{\mu_{Fwd}}/2^{\mu_{PDCCH}} \rfloor \quad \lfloor X \rfloor \text{ indicates performing rounding down on X.}$$

In other words, in embodiments of this application, when the relay device determines the L time units based on the second information, the second time unit in which the second information is located is a time unit corresponding to a subcarrier spacing of the resource used for signal relay transmission, that is, the relay device determines the time unit based on a time unit with subcarrier spacing conversion.

In an implementation, that the relay device determines the L time units based on the L time offsets and the second time unit in which the second information is located includes: The relay device determines the L time units based on the second time unit, the initial offset, and the L time offsets. An offset between one of the L time units and the second time unit is a sum of one time offset and the initial offset.

In this implementation, a time offset between the second time unit in which the second information is located and the time unit used for signal relay transmission is not less than the initial offset. For example, the initial offset is 2, and the network device configures three time offsets based on the first information: 0, 1, and 2. After receiving the second information in the second time unit, the relay device determines three time units based on the second time unit, the initial offset being 2, and the three time offsets configured based on the first information. Offsets between the three time units and the second time unit are: two time units, three time units, and five time units. Alternatively, after receiving the second information in the second time unit, the relay device determines, based on the second time unit and the initial offset being 2, a third time unit that is offset by two time units relative to the second time unit. Then, the relay device determines three time units based on the third time unit and the three time offsets configured based on the first information. Time offsets between the three time units and the third time unit are: 0, 1, and 2.

Optionally, the initial offset is determined based on one or more pieces of the following capability information of the relay device:
beam switching time on a backhaul link, beam switching time on an access link, decoding time of a physical downlink control channel PDCCH, a subcarrier spacing of a PDCCH, an identifier of a subcarrier spacing of a PDCCH, a subcarrier spacing of the time resource used for signal relay transmission, or an identifier of a subcarrier spacing of the time resource used for signal relay transmission.

For example, the relay device reports the capability information of the relay device to the network device, and the network device determines the initial offset based on the capability information of the relay device, and notifies the relay device. For example, the network device may configure the initial offset for the relay device based on the first information, or configure the initial offset for the relay device based on other information. Alternatively, the relay device and the network device may separately determine the initial offset based on the capability information of the relay device.

For example, the initial offset may be a slot or a symbol.

When the initial offset is a symbol, Table 8 provides optional values of the initial offset $O_{initial}$ during specific implementation. The initial offset $O_{initial}$ may be one of the plurality of optional values shown in Table 8, or the initial offset $O_{initial}$ may be a maximum value in the plurality of optional values shown in Table 8. $T_{MT}$ is the beam switching time on the backhaul link, $T_{Fwd}$ is the beam switching time on the two links, $\mu_{Fwd}$ is the identifier of the subcarrier spacing corresponding to the resource used for signal relay transmission, $\mu_{PDCCH}$ is the identifier of the subcarrier spacing corresponding to the resource carrying the second information, and d is additional beam switching time.

Table 8

| Initial offset $O_{initial}$ |
|---|
| $T_{\mathrm{MT}} + d \cdot 2^{\mu_{Fwd}}/2^{\mu_{PDCCH}}$ |
| $T_{\mathrm{Fwd}} + d \cdot 2^{\mu_{Fwd}}/2^{\mu_{PDCCH}}$ |
| $\min(T_{\mathrm{MT}}, T_{\mathrm{Fwd}}) + d \cdot 2^{\mu_{Fwd}}/2^{\mu_{PDCCH}}$ |
| $\max(T_{\mathrm{MT}}, T_{\mathrm{Fwd}}) + d \cdot 2^{\mu_{Fwd}}/2^{\mu_{PDCCH}}$ |

(continued)

| Initial offset $O_{initial}$ |
|---|
| $48 + d \cdot 2^{\mu_{Fwd}}/2^{\mu_{PDCCH}}$ |
| $24 + d \cdot 2^{\mu_{Fwd}}/2^{\mu_{PDCCH}}$ |
| $14 + d \cdot 2^{\mu_{Fwd}}/2^{\mu_{PDCCH}}$ |
| 0 |
| 14 |
| 28 |
| 48 |

For example, the additional beam switching time $d$ is related to the identifier $\mu_{PDCCH}$ of the subcarrier spacing corresponding to the resource carrying the second information. For example, the second information is DCI, the resource carrying the second information is a physical downlink control channel (physical downlink control channel, PDCCH) resource, and $\mu_{PDCCH}$ is the identifier of the subcarrier spacing of the PDCCH resource. For example, a correspondence between the additional beam switching time $d$ and the identifier $\mu_{PDCCH}$ of the subcarrier spacing shown in Table 9 may be predefined. A unit of the additional beam switching time $d$ is a symbol, and symbol duration of the symbol is duration of a symbol corresponding to a subcarrier spacing whose identifier is $\mu_{PDCCH}$. For example, $\mu_{DCCH}$ is 0. The additional beam switching time $d$ is 8 symbols, and symbol duration of each symbol is duration of a symbol corresponding to a subcarrier spacing whose identifier is 0. If there are a plurality of values, one of the values is determined based on relay capability information or network indication information.

Table 9

| $\mu_{PDCCH}$ | Additional beam switching time $d$ (symbol) |
|---|---|
| 0 | 8 |
| 1 | 8 |
| 2 | 14 |
| 3 | 28 |
| 5 | {56, 112} |

For another example, the additional beam switching time $d$ is related to the identifier $\mu_{Fwd}$ of the subcarrier spacing corresponding to the resource used for signal relay transmission. For example, the resource determined by the relay device in S203 is an access link resource. In this case, the identifier $\mu_{Fwd}$ of the subcarrier spacing is used to identify a subcarrier spacing of the access link resource. For example, a correspondence between the additional beam switching time $d$ and the identifier $\mu_{Fwd}$ of the subcarrier spacing shown in Table 10 may be predefined. A unit of the additional beam switching time $d$ is a symbol, and duration of the symbol is duration of a symbol corresponding to a subcarrier spacing whose identifier is $\mu_{Fwd}$. For example, the identifier of the subcarrier spacing of the access link resource is 3. The additional beam switching time $d$ is 28 symbols, and symbol duration of each symbol is duration of a symbol corresponding to the subcarrier spacing whose identifier is 3.

Table 10

| $\mu_{Fwd}$ | Additional beam switching time $d$ (symbol) |
|---|---|
| 0 | 8 |
| 1 | 8 |
| 2 | 14 |
| 3 | 28 |
| 5 | {56, 112} |

It should be noted that values of *d* shown in Table 9 and Table 10 are merely examples, and may be specifically set based on a specific implementation requirement. This is not limited in this application.

In an implementation, a resource pattern activated based on the second information may take effect for a plurality of times.

In this application, the resource pattern includes actual or nominal start time, an actual or nominal time length, or actual or nominal end time that corresponds to the time resource. For example, the time length of the resource pattern may be a time span corresponding to an actual time resource, or may be a quantity of nominal slots corresponding to the resource pattern, where the quantity of nominal slots is not less than the quantity of actual slots. Specifically, for example, in FIG. 5, the time length of the resource pattern is six slots in total: a slot 3 to a slot 8 (namely, the time span corresponding to the actual time resource), the start time is the slot 3 (or a 3rd slot after a PDCCH is received), and the end time is the slot 8 (or after six slots take effect). For another example, in FIG. 5, the time length of the resource pattern is 10 slots in total: a slot 0 to a slot 9 (namely, the quantity of nominal slots), the start time is the slot 0 (or a slot in which a PDCCH is received), and the end time is the slot 9. For another example, as shown in FIG. 10, the time length of the resource pattern is five slots in total: a slot 2 to a slot 6 (namely, the quantity of actual slots), the start time is the slot 2, and the end time is the slot 6.

For example, the L time resources in the L time units determined by the relay device after the relay device receives the second information are three time resources in a total of three slots: a slot 2, a slot 4, and a slot 6 in a radio frame n shown in FIG. 10. For example, the time resource in the slot 2 is a symbol 0 to a symbol 3, the time resource in the slot 4 is the symbol 0 to a symbol 7, and the time resource in the slot 6 is a symbol 6 to a symbol 13. Relay beams corresponding to the three time resources are: a beam 1, a beam 7, and a beam 0. The resource pattern may start to take effect again in a next slot after a slot in which the last time resource is located ends, that is, the resource pattern starts to take effect again in a slot 7. The resource pattern means that a relative location relationship between the three slots, locations of the time resources in the slots, and the beams corresponding to the time resources that are determined by the relay device are specific. In this case, three time resources in the slot 7, a slot 9, and a radio frame n+1 are used for signal relay transmission. The time resource in the slot 7 is the symbol 0 to the symbol 3, the time resource in the slot 9 is the symbol 0 to the symbol 7, and the time resource in a slot 1 in the radio frame n+1 is the symbol 6 to the symbol 13. The three resources sequentially correspond to the beam 1, the beam 7, and the beam 0 respectively. It may be understood that frequency shift is performed on the three time resources in a unit of a slot, and beams sequentially corresponding to the three time resources remain unchanged.

Optionally, it may be predefined, configured based on the first information, or indicated by the second information that the resource pattern activated based on the second information takes effect for a plurality of times. Alternatively, information other than the first information or the second information sent by the network device to the relay device may indicate that the resource pattern activated based on the second information takes effect for a plurality of times.

For example, it may be predefined that the resource pattern activated based on the second information takes effect for a plurality of times. The relay device may determine that the resource pattern activated based on the second information takes effect for a plurality of times.

For another example, the first information or the second information includes first indication information indicating that the resource pattern activated based on the second information takes effect a plurality of times. The relay device determines, based on the indication information, whether the resource pattern activated based on the second information takes effect a plurality of times. Specifically, when the indication information is of a first value, the relay device may determine that the resource pattern activated based on the second information takes effect for a plurality of times; otherwise, the resource pattern activated based on the second information takes effect for only one time. For example, the first indication information may be 1 bit. When the 1 bit indicates "0", it indicates that the resource pattern activated based on the second information takes effect for only one time. When the 1 bit indicates "1", it indicates that the resource pattern activated based on the second information takes effect for a plurality of times.

Optionally, a quantity of times that the resource pattern activated based on the second information takes effect may be configured based on the first information, indicated by the second information, determined based on a monitoring periodicity corresponding to the PDCCH, or indicated by other information sent by the network device to the relay device.

For another example, as shown in FIG. 11, the L time resources in the L time units determined by the relay device after the relay device receives the second information are nine time resources in a total of nine slots: a slot 2 to a slot 4 and a slot 6 to a slot 9. In addition, a relay beam corresponding to each time resource may be determined. The second information further indicates that the resource pattern activated based on the second information takes effect for two times. The relay device may determine that the resource pattern takes effect again after the last slot, namely, the slot 9, of the resource pattern. Alternatively, a time interval between two consecutive times that the resource pattern takes effect may be predefined, or configured or indicated by the network device. In this case, the relay device may determine that the resource pattern takes effect again after the time interval following a previous time that the resource pattern takes effect.

Optionally, the resource pattern activated based on the second information may be configured based on the first information, indicated by the second information, determined based on the monitoring periodicity corresponding to the PDCCH, or indicated by other information sent by the network device to the relay device. For example, the actual time length corresponding to the resource pattern is configured based on the first information. For another example, the nominal time length corresponding to the resource pattern is configured based on the first information.

For example, the first information or the second information may include second indication information, and the second indication information indicates a quantity of times that the resource pattern activated based on the second information takes effect. If the second indication information is of a second value, the resource pattern activated based on the second information may take effect for $K_1$ times. If the second indication information is of a third value, the resource pattern activated based on the second information may take effect for $K_2$ times. When the second indication information is of the third value, the resource pattern activated based on the second information may take effect for $K_3$ times, and the like. $K_1$, $K_2$, and $K_3$ are positive integers. For example, $K_1$ may be 1, and $K_2$ and $K_3$ are greater than 1; or $K_1$, $K_2$, and $K_3$ are all greater than 1.

For another example, the quantity of times that the resource pattern activated based on the second information takes effect is determined based on the monitoring periodicity corresponding to the PDCCH. After the relay device receives the second information on a PDCCH monitoring occasion (monitoring occasion, MO), the resource pattern activated based on the second information repeatedly takes effect until a next PDCCH monitoring occasion.

For another example, the quantity of times that the resource pattern activated based on the second information takes effect is further related to an effective time length T of the resource pattern. The effective time length T may be determined based on the first information or other configuration information. After the relay device receives the second information, the resource pattern activated based on the second information repeatedly takes effect only within the effective time length T.

In an implementation, the network device may configure a plurality of resource sets for the relay device based on the first information, and each resource set includes a plurality of time offsets and a plurality of relay beams. The network device may activate at least two of the plurality of resource sets based on the second information.

A resource set *i* in the plurality of resource sets configured based on the first information includes $L_i$ time offsets and $N_i$ relay beams. The L time resource offsets and the N relay beam sets that are configured based on the first information and that are described above may be considered as resources in one resource set. For a configuration manner of configuring another resource set in the plurality of resource sets based on the first information, refer to the configuration manner of the resource set. Details are not described herein again.

The second information is used to activate the at least two of the plurality of resource sets configured based on the first information, and indicates $T_i$ time offsets and $L_i$ relay beams that correspond to the $L_i$ time offsets included in the resource set *i* in the at least two resource sets. As described above, the T time offsets and the L relay beams that are indicated by the second information may be considered as time offsets and relay beams that correspond to one of the at least two resource sets activated based on the first information. For a manner in which the second information indicates time offsets and relay beams that correspond to another activated resource set, refer to the manner in which the second information indicates the time offsets and the relay beams that correspond to the resource set. Details are not described herein again.

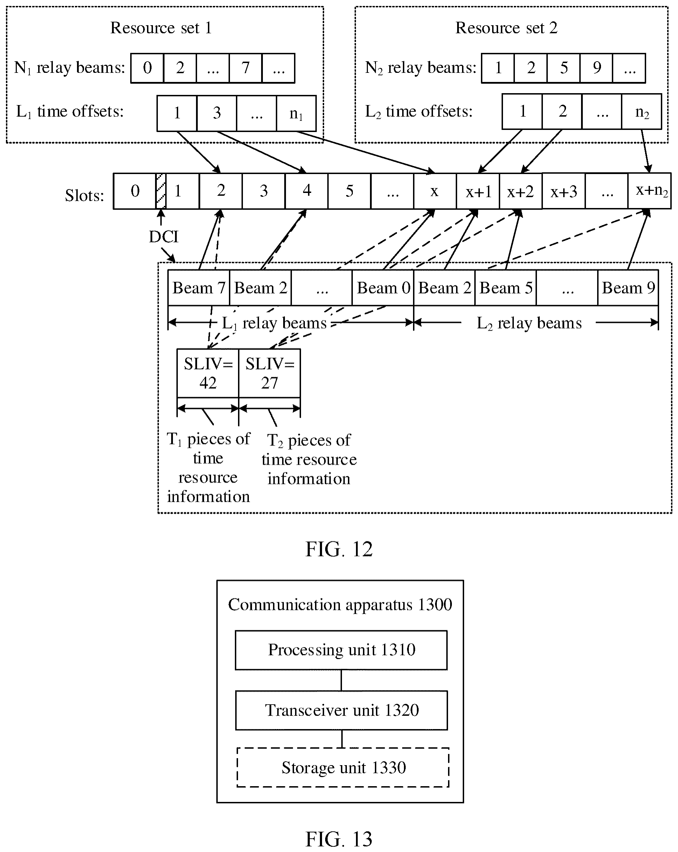

For example, the network device configures a plurality of resource sets for the relay device based on an RRC message. As shown in FIG. 12, a resource set 1 and a resource set 2 in the plurality of resource sets configured based on the RRC message are activated based on DCI. For example, the DCI may include an identifier of the resource set 1 and an identifier of the resource set 2. The relay device may determine, based on the identifiers, of the resource sets, included in the DCI, the resource sets activated based on the DCI. The resource set 1 configured based on the RRC message includes $N_1$ relay beams and $L_1$ time offsets, and the resource set 2 includes $N_2$ relay beams and $L_2$ time offsets. The $L_1$ time offsets in the resource set 1 are sequentially 1, 3, ..., and $n_1$. The DCI indicates $L_1$ relay beams and $T_1$ pieces of time resource information that correspond to the $L_1$ time offsets. The $L_1$ relay beams are $L_1$ relay beams in the $N_1$ relay beams included in the resource set 1 configured based on the RRC message, and are sequentially a beam 7, a beam 2, ..., and a beam 0. In this example, $T_1=1$, and SLIV=42 included in the time resource information is applicable to each slot determined by the relay device based on the $L_1$ time offsets. In addition, the $L_2$ time offsets in the resource set 2 are sequentially 1, 2, ..., and $n_2$, and the DCI further indicates $L_2$ relay beams and $T_2$ pieces of time resource information that correspond to the $L_2$ time offsets. The $L_2$ relay beams are $L_2$ relay beams in the $N_2$ relay beams included in the resource set 1 configured based on the RRC message, and are sequentially the beam 2, a beam 5, ..., and a beam 9. In this example, $T_2=1$, and SLIV=27 included in the time resource information is applicable to each slot determined by the relay device based on the $L_2$ time offsets. The relay device may determine, based on a slot x and the $L_2$ time offsets in the resource set 2, the $L_2$ slots corresponding to the $L_2$ time offsets, the slot x is a last slot in the $L_1$ slots determined by the relay device based on a slot 0 in which the DCI is located and the $L_1$ time offsets in the resource set 1. For example, the relay device determines, based on a time offset in the $L_2$ time offsets being 1, that the $L_2$ slots include a slot x+1 that is offset by one slot relative to the slot x; determines, based on a time offset being 2, that the $L_2$ slots include a slot x+2; ...; and determines, based on a time offset being $n_2$, that the $L_2$ slots include a slot $x+n_2$.

In an implementation, a bit width of the identifier, of the resource set, included in the second information is determined based on configuration information of a base station.

For example, the bit width of the identifier of the resource set is a preset value.

For another example, the bit width of the identifier of the resource set is configured based on RRC information.

For another example, the bit width of the identifier of the resource set is determined based on a quantity n of resource sets in the RRC message. Specifically, the bit width may be $\lceil \log_2 n \rceil$, where $\lceil \cdot \rceil$ indicates rounding up.

For another example, the bit width of the identifier of the resource set is determined based on a quantity n' of aperiodic forwarding resource sets in the RRC message. Specifically, the bit width may be $\lceil \log_2 n' \rceil$, where $\lceil \cdot \rceil$ indicates rounding up.

In an implementation, a quantity of identifiers, of the resource set, included in the DCI is determined based on configuration information of a base station. For example, the quantity of identifiers is configured based on RRC information.

Based on the foregoing solutions provided in embodiments of this application, the network device may pre-configure, for the relay device based on the first information, a candidate resource parameter (including a candidate parameter of a time resource, a candidate parameter of a beam resource, and the like) used for signal relay transmission, and then indicate, to the relay device based on a relay transmission requirement and the second information, one or more candidate parameters of resources used for signal relay transmission, so that the relay device may determine one or more resources used for relay signal transmission, and perform signal relay transmission via the one or more resources. Therefore, the relay device can perform signal relay transmission on demand, to improve allocation flexibility of signal relay transmission resources and utilization of relay transmission resources.

In an optional implementation of this application, the network device configures one or more aperiodic forwarding resource sets for the relay device based on the first information, and each forwarding resource set corresponds to one or more time resource sets and/or one or more beam sets. The network device may indicate at least one piece of the following information based on the second information:
identifiers of the one or more forwarding resource sets, the T pieces of time resource information, or identifiers of the L relay beams.

The network device may configure V time resource sets for the relay device based on the first information. A time resource set $i$ includes $B_i$ parameter groups, where V is greater than or equal to 1, and $i=0, 1, 2, ...,$ and V-1. A parameter group j in the $B_i$ parameter groups includes a time offset $O_j$, an identifier $S_j$ of a start symbol, and duration $D_j$, where $j=0, 1, 2, ...,$ and $B_i$-1.

In an implementation, the quantity V of time resource sets and the quantity $B_i$ of parameter groups included in each time resource set may be determined based on RRC configuration, the quantity $B_i$ of parameter groups included in each time resource set may be determined based on the RRC configuration, and at least two of the V time resource sets may include different quantities of parameter groups.

For example, a maximum value $B_{max}$ of $B_i$ may be specified, for example, $B_{max}$=16.

In another implementation, quantities of parameter groups included in all of the V time resource sets may be the same, that is, $B_i$=B.

Table 11 shows an example of parameter groups included in the time resource set $i$ in the V time resource sets configured based on the first information, and the time resource set $i$ includes the $B_i$ parameter groups, identifiers $j$ of the $B_i$ parameter groups are: 0, 1, 2, ..., and $B_i$-1. For example, a parameter group 0 in the time resource set i includes a time offset $O_0$, a start symbol $S_0$, and duration $D_0$. A parameter group 1 includes a time offset $O_1$, a start symbol $S_1$, and duration $D_1$. The parameter group $B_i$-1 includes a time offset $O_{Bi-1}$, a start symbol $S_{Bi-1}$, and duration $D_{Bi-1}$.

Table 11

| Time resource set $i$ | | | |
|---|---|---|---|
| Identifier $j$ of a parameter group | Time offset $O_j$ | Start symbol $S_j$ | Duration $D_j$ |
| 0 | $O_0$ | $S_0$ | $D_0$ |
| 1 | $O_1$ | $S_1$ | $D_1$ |
| 2 | $O_2$ | $S_2$ | $D_2$ |
| ... | ... | ... | |
| $B_i$-1 | $O_{Bi-1}$ | $S_{Bi-1}$ | $D_{Bi-1}$ |

One time resource set may include one or more parameters that are common parameters. For example, the time offset may be a common parameter. For example, time offsets in the $B_i$-1 parameter groups is common configuration, and values of start symbols and duration in different parameter groups are separately configured based on the first information. For another example, the time offset and the start symbol are common configuration, and values of duration in different parameter groups are separately configured based on the first information.

It should be understood that different forwarding resource sets may be configured based on the first information to correspond to different time resource sets, or different forwarding resource sets may share the V time resource sets. Alternatively, the network device may separately configure a plurality of time resource sets based on the first information, and when configuring one forwarding resource set, indicate the V time resource sets corresponding to the forwarding resource set.

The T pieces of time resource information in the second information correspond to the V time resource sets, and a $t^{th}$ piece of time resource information indicates an identifier $j_t$ of a parameter group in a time resource set $t$ corresponding to the time resource information, and includes a time offset $O_{jt}$, a start symbol $S_{jt}$, and duration $D_{jt}$.

For example, T may be equal to V, that is, the T pieces of time resource information one-to-one correspond to the V time resource sets. An quantity of time resource information included in the second information may be determined based on the quantity V of time resource sets corresponding to the forwarding resource set indicated by the second information. In other words, the first information (for example, the RRC message) implicitly indicates the quantity T of time resource information included in the second information (for example, the DCI). Optionally, the quantity L of relay beam identifiers included in the second information may alternatively be equal to V, that is, L is determined based on V.

For another example, T may not be equal to V. For example, V<T. The first information may be used to configure a correspondence between the V time resource sets and the T pieces of time resource information in the second information.

For example, the first information may be used to configure an quantity $F_i$ of time resource information, in the second information, corresponding to the time resource set $i$, where

$$\sum_{v=0}^{V-1} F_i = T.$$

For another example, identifiers of the time resource information, in the second information, corresponding to the time resource set $i$ are from $\lfloor T/V \rfloor \times i$ to $\lfloor T/V \rfloor \times (i+1) - 1$, where $i = 0, 1, ..., V-2$, that is, a $\lfloor T/V \rfloor \times i$ th piece of time resource information to a $\lfloor T/V \rfloor \times (i+1) - 1$ th piece of time resource information in the second information correspond to the time resource set i. Identifiers of the time resource information corresponding to a time resource set V-1 are from $\lfloor T/V \rfloor \times (V-1)$ to T-1.

Further, the correspondence between the T pieces of time resource information and the V time resource sets is determined based on configuration in the first information. For example, the first information may specifically be used to configure that the correspondence is determined in one of the foregoing two examples.

For example, a quantity of bits occupied by one piece of time resource information in the second information may be configured based on the first information. For example, the first information may be used to configure that the T pieces of time resource information occupy a same quantity of bits.

For example, the second information indicates a plurality of forwarding resource sets, and time resource information of different forwarding resource sets may occupy different quantities of bits. For example, a quantity of bits occupied by one piece of time resource information of one forwarding resource set in the plurality of forwarding resource sets is different from a quantity of bits occupied by one piece of time resource information of another forwarding resource set. The first information may be used to configure quantities of bits of time resource information for different forwarding resource sets.

For example, the second information indicates a plurality of forwarding resource sets, and different forwarding resource sets correspond to a same quantity of bits. For example, the first information may configure a quantity $b_{time}$ of bits for time resource information of all the forwarding resource sets, that is, a quantity of bits occupied by each piece of time resource information in the second information is $b_{time}$. In other words, the first information may be used to configure a quantity $b_{time}$ of bits occupied by one piece of time resource information in one piece of second information, and a quantity of bits occupied by each piece of time resource information is $b_{time}$.

For another example, a quantity of bits occupied by one piece of time resource information in the second information may be determined based on the first information.

For example, a quantity of bits occupied by one piece of time resource information may be related to a quantity of parameter groups included in a time resource set corresponding to the time resource information. For example, a quantity of bits occupied by the time resource information, corresponding to the time resource set $i$, in the second information is $\lceil \log_2 B_i \rceil$.

For another example, the T pieces of time resource information in the second information occupy a same quantity of bits, and a quantity of bits occupied by one piece of time resource information is determined based on a quantity $B_{max}$ of parameter groups in a time resource set that includes a largest quantity of parameter groups in the V time resource sets, that is, a quantity of bits of one piece of time resource information is $\lceil \log_2 B_{max} \rceil$, where $B_{max} = \max_{i=0\sim V-1} B_i$.

Alternatively, a quantity of bits of one piece of time resource information is denoted as $\max_{i=0\sim V-1} \lceil \log_2 B_i \rceil$.

For another example, a quantity of bits occupied by one piece of time resource information in the second information may be related to a quantity of parameter groups included in all time resource sets (configured by the network device for the relay device). For example, a time resource set $i$ corresponds to a time resource set v. In all second information, a quantity of bits occupied by one time resource information field (field) meets $\max \substack{\max_{i=0,1,...,I-1,} \\ v=0\sim V-1} \lceil \log_2 B_{i,v} \rceil$, where $I$ is a maximum quantity of time resource sets.

In another implementation, the foregoing parameter $B_i$ or $B_{i,v}$ may alternatively be replaced with a maximum value $B'_i$ or $B'_{i,v}$ of a time resource index (or an identifier of a parameter group or an index of a parameter group) in the time resource set $i$ or a parameter group $v$. Therefore, a quantity $b_{time}$ of bits occupied by one time resource information field is determined.

In another implementation, a minimum value of a quantity of bits occupied by one piece of time resource information in the second information is $b_0$, where $b_0$ may be a preset value or a value indicated by the configuration information of the base station. In other words, it is determined based on any one of the foregoing embodiments that the quantity of bits is $b'_{time}$. Actually, the quantity $b_{time}$ of bits of one piece of time resource information in the second information is max$\{b'_{time}, b_0\}$, and the T pieces of time resource information occupy T×max$\{b'_{time}, b_0\}$ bits in total in the second information. A minimum length of the time resource information field is limited. This helps maintain a size of the second information and simplify a format design.

In an implementation, a value of $b_0$ may be 1.

Optionally, a quantity of bits occupied by an identifier, of each relay beam, in the second information may be configured based on the first information or determined based on the first information. For example, identifiers of the L relay beams occupy a same quantity of bits. Alternatively, a quantity of bits occupied by each of the identifiers of the L relay beams is related to a quantity of beams included in a beam set corresponding to the identifier of the relay beam. For details, refer to the manner of determining the quantity of bits occupied by the time resource information in the second information. Details are not described herein again.

In an implementation, different forwarding resource sets may correspond to different quantities of bits occupied by time resource information (and/or quantities of bits occupied by identifiers of relay beams) in the second information. The relay device may determine, based on an identifier that is of a forwarding resource set and that is included in the received second information, the forwarding resource set corresponding to the identifier, to obtain, from the second information based on a quantity of bits occupied by time resource information corresponding to the forwarding resource set and/or a quantity of bits occupied by an identifier of a relay beam, the T pieces of time resource information and the identifiers of the L relay beams that correspond to the forwarding resource set.

In another implementation, different forwarding resource sets may correspond to a same quantity of bits occupied by the time resource information (and/or a same quantity of bits occupied by the identifiers of the relay beams) in the second information. This can reduce complexity of detecting the second information by the relay device and complexity of designing the second information. For example, the second information may be of a fixed length.

An quantity of time resource information in the second information may be determined based on a predefined or pre-configured length of the second information and a quantity of bits occupied by one piece of time resource information in the second information. In addition, a quantity of identifiers, of the relay beams, in the second information may be determined based on the predefined or pre-configured length of the second information and a quantity of bits occupied by an identifier, of one relay beam, in the second information.

For example, both the quantity of time resource information and the quantity of identifiers of the relay beams in the second information are T, and the length of the second information is K. In this case, T is not greater than $\lceil K/(b_{time} + b_{beam}) \rceil$, where $b_{time}$ indicates a quantity of bits occupied by one piece of time resource information, and $b_{beam}$ indicates a quantity of bits occupied by an identifier of one relay beam. For example, K may be an integer less than 140. For example, K is 130.

For example, both the quantity of time resource information and the quantity of identifiers of the relay beams in the second information are T. Table 12a or Table 12b may show a correspondence between T, the quantity $b_{time}$ of bits occupied by the time resource information, and the quantity $b_{beam}$ of bits occupied by the identifier of the relay beam. A value of the quantity T of time resource information and the quantity T of identifiers of the relay beams in the second information, a value of the quantity $b_{time}$ of bits occupied by the time resource information, and a value of the quantity $b_{beam}$ of bits occupied by the identifier of the relay beam may be in one row in Table 12a or Table 12b. The correspondence shown in Table 12a or Table 12b may be predefined. During specific implementation, values of parameters in one row are selected for implementation. It should be understood that, during specific implementation, the predefined correspondence may include only some values of T in the table, or combinations of some rows and some columns. This is not limited in this application.

Table 12a

| Quantity $b_{time}$ of bits occupied by one piece of time resource information | Quantity $b_{beam}$ of bits occupied by an identifier of one relay beam | Quantity T of fields |
|---|---|---|
| 1 | 1 | 65 |
| 1 | 2 | 43 |
| 1 | 3 | 32 |
| 1 | 4 | 26 |
| 1 | 5 | 21 |
| 1 | 6 | 18 |
| 2 | 1 | 43 |
| 2 | 2 | 32 |
| 2 | 3 | 26 |
| 2 | 4 | 21 |
| 2 | 5 | 18 |
| 2 | 6 | 16 |
| 3 | 1 | 32 |
| 3 | 2 | 26 |
| 3 | 3 | 21 |
| 3 | 4 | 18 |
| 3 | 5 | 16 |
| 3 | 6 | 14 |
| 4 | 1 | 26 |
| 4 | 2 | 21 |
| 4 | 3 | 18 |
| 4 | 4 | 16 |
| 4 | 5 | 14 |
| 4 | 6 | 13 |
| 5 | 1 | 21 |
| 5 | 2 | 18 |
| 5 | 3 | 16 |
| 5 | 4 | 14 |
| 5 | 5 | 13 |
| 5 | 6 | 11 |
| 6 | 1 | 18 |
| 6 | 2 | 16 |
| 6 | 3 | 14 |
| 6 | 4 | 13 |
| 6 | 5 | 11 |
| 6 | 6 | 10 |

(continued)

| Quantity $b_{time}$ of bits occupied by one piece of time resource information | Quantity $b_{beam}$ of bits occupied by an identifier of one relay beam | Quantity T of fields |
|---|---|---|
| 7 | 1 | 16 |
| 7 | 2 | 14 |
| 7 | 3 | 13 |
| 7 | 4 | 11 |
| 7 | 5 | 10 |
| 7 | 6 | 10 |
| 8 | 1 | 14 |
| 8 | 2 | 13 |
| 8 | 3 | 11 |
| 8 | 4 | 10 |
| 8 | 5 | 10 |
| 8 | 6 | 9 |

Table 12b

| Quantity $b_{time}$ of bits occupied by one piece of time resource information | Quantity $b_{beam}$ of bits occupied by an identifier of one relay beam | Quantity T of fields |
|---|---|---|
| 1 | 1 | 60 |
| 1 | 2 | 40 |
| 1 | 3 | 30 |
| 1 | 4 | 24 |
| 1 | 5 | 20 |
| 1 | 6 | 17 |
| 2 | 1 | 40 |
| 2 | 2 | 30 |
| 2 | 3 | 24 |
| 2 | 4 | 20 |
| 2 | 5 | 17 |
| 2 | 6 | 15 |
| 3 | 1 | 30 |
| 3 | 2 | 24 |
| 3 | 3 | 20 |
| 3 | 4 | 17 |
| 3 | 5 | 15 |
| 3 | 6 | 13 |
| 4 | 1 | 24 |
| 4 | 2 | 20 |
| 4 | 3 | 17 |
| 4 | 4 | 15 |
| 4 | 5 | 13 |

(continued)

| Quantity $b_{time}$ of bits occupied by one piece of time resource information | Quantity $b_{beam}$ of bits occupied by an identifier of one relay beam | Quantity T of fields |
|---|---|---|
| 4 | 6 | 12 |
| 5 | 1 | 20 |
| 5 | 2 | 17 |
| 5 | 3 | 15 |
| 5 | 4 | 13 |
| 5 | 5 | 12 |
| 5 | 6 | 10 |
| 6 | 1 | 17 |
| 6 | 2 | 15 |
| 6 | 3 | 13 |
| 6 | 4 | 12 |
| 6 | 5 | 10 |
| 6 | 6 | 10 |
| 7 | 1 | 15 |
| 7 | 2 | 13 |
| 7 | 3 | 12 |
| 7 | 4 | 10 |
| 7 | 5 | 10 |
| 7 | 6 | 9 |
| 8 | 1 | 13 |
| 8 | 2 | 12 |
| 8 | 3 | 10 |
| 8 | 4 | 10 |
| 8 | 5 | 9 |
| 8 | 6 | 8 |

For another example, a value of T is a preset value. For example, T=8. For another example, T=15. For another example, T=24. For another example, T=32.

In an implementation, the network device may determine a parameter combination based on a predefined table and a parameter combination index (or referred to as a configuration index or a configuration parameter) defined in the table, send the parameter combination index to the relay device, and notify the relay device of the parameter combination used by the second information. The relay device may determine, based on the parameter combination index and the predefined table, the parameter combination used by the second information. Each parameter combination includes at least one of the following format parameters of the second information:

a length P of the second information, a quantity $b_{payload}$ of bits of a payload of the second information, a quantity $b_{set\ ID}$ of bits of an identifier, of one resource set, in the second information, a quantity $b_{time}$ of bits occupied by one piece of time resource information in the second information, a quantity $b_{beam}$ of bits occupied by an identifier, of one relay beam, in the second information, or a quantity T of fields.

For example, the second information is DCI. The predefined table may be as follows:

Table 13

| Parameter combination index (or configuration index) | Length of DCI ($b_{payload}$ bits) | Quantity $b_{set ID}$ of bits of an identifier of a resource set | Quantity $b_{time}$ of bits occupied by one piece of time resource information | Quantity $b_{beam}$ of bits occupied by an identifier of one relay beam | Quantity T of fields |
|---|---|---|---|---|---|
| 0 | 40 | 4 | 4 | 1 | 7 |
| 1 | 40 | 4 | 4 | 2 | 6 |
| 2 | 40 | 4 | 4 | 4 | 4 |
| 3 | 40 | 4 | 6 | 2 | 4 |
| 4 | 64 | 6 | 7 | 1 | 7 |
| 5 | 64 | 6 | 6 | 4 | 5 |
| 6 | 64 | 6 | 4 | 6 | 5 |
| 7 | 64 | 6 | 4 | 4 | 7 |
| 8 | 96 | 8 | 7 | 1 | 11 |
| 9 | 96 | 8 | 6 | 4 | 8 |
| 10 | 96 | 8 | 4 | 6 | 8 |
| 11 | 96 | 8 | 4 | 4 | 11 |
| 12 | 128 | 8 | 7 | 1 | 15 |
| 13 | 128 | 8 | 6 | 4 | 12 |
| 14 | 128 | 8 | 4 | 6 | 12 |
| 15 | 128 | 8 | 4 | 4 | 15 |
| 16 | 140 | 8 | 7 | 1 | 16 |
| 17 | 140 | 8 | 6 | 4 | 13 |
| 18 | 140 | 8 | 4 | 6 | 13 |
| 19 | 140 | 8 | 4 | 4 | 16 |
| ... | ... | | ... | ... | ... |

It should be understood that, during specific implementation, the predefined correspondence may include only some values in the table, or combinations of some rows and some columns. This is not limited in this application.

For another example, a value of T is a preset value. For example, T=8. For another example, T=15. For another example, T=24. For another example, T=32.

For another example, a value of $b_{payload}$ is at least one of 40, 64, 72, 96, 128, and 140.

For another example, a value of $b_{set ID}$ is at least one of 4, 6, 8, 10, and 12.

For another example, a value of $b_{time}$ is at least one of 4, 5, 6, 7, 8, 10, 12, and 16.

For another example, a value of $b_{beam}$ is at least one of 1, 2, 4, 3, 5, and 6.

In an implementation, a type of a cyclic prefix (cyclic prefix, CP) of an OFDM symbol corresponding to the time resource indicated by the time resource information may be a normal CP (normal CP, NCP) by default.

In another implementation, the first information may further used to configure, as an extended CP (extended CP) or an NCP, a type of a cyclic prefix (cyclic prefix, CP) of an OFDM symbol corresponding to the time resource indicated by the time resource information.

When the CP of the OFDM symbol is a normal CP, a time length of one OFDM symbol is $(144 + 2048)K \cdot 2^{-\mu}$ or $(160 + 2048)\kappa \cdot 2^{-\mu}$. When the CP of the OFDM symbol is an extended CP, a time length of one OFDM symbol is $(512 + 2048)\kappa \cdot 2^{-\mu}$, where $\kappa = 64$, and $\mu$ is an index of a reference subcarrier spacing. When the CP of the OFDM symbol is an extended CP, one slot includes 12 OFDM symbols, and a time length of each OFDM symbol is 1/12 of the slot (refer to an existing protocol).

In an implementation, the network device may determine, based on the capability information of the relay device, whether the relay device supports one or more of the following types of control signaling:

aperiodic control signaling (which is also referred to as dynamic control signaling), semi-persistent control signaling, or periodic control signaling.

Optionally, the relay device may send the capability information to the network device. Alternatively, the capability information of the relay device may be predefined, and the capability information is pre-configured by the network device and the relay device.

For example, the network device determines, based on the capability information of the relay device, that the relay device supports the aperiodic control signaling. The network device may perform aperiodic (or dynamic) control on relay forwarding of the relay device through the aperiodic control signaling; and/or the relay device may receive aperiodic control (or dynamic control) signaling of the network device, and forward a signal under aperiodic control of the network device.

For another example, the network device determines, based on the capability information of the relay device, that the relay device supports the semi-persistent control signaling. The network device may perform semi-persistent control on relay forwarding of the relay device; and/or the relay device may forward a signal under semi-persistent control of the network device. The network device may configure a semi-persistent forwarding resource for the relay device based on the RRC message, and then activate the semi-persistent forwarding resource based on a medium access control (medium access control, MAC) control element (control element, CE), and the relay device performs semi-persistent forwarding via the activated semi-persistent forwarding resource, that is, periodically forwards a signal via the semi-persistent forwarding resource after the resource is activated; and/or the network device may deactivate the semi-persistent forwarding resource based on the MAC CE, and the relay device stops, based on the MAC CE, signal forwarding via the deactivated semi-persistent forwarding resource.

For another example, the network device determines, based on the capability information of the relay device, that the relay device supports the periodic control signaling. The network device may perform periodic control on relay forwarding of the relay device; and/or the relay device may forward a signal under periodic control of the network device.

The foregoing describes in detail the method provided in this application with reference to the accompanying drawings. The following accompanying drawings describe a communication apparatus and a communication device provided this application. To implement functions in the method provided in this application, network elements may include a hardware structure and/or a software module, and implement the foregoing functions in a form of the hardware structure, the software module, or a combination of the hardware structure and the software module. Whether a function in the foregoing functions is performed in a form of the hardware structure, the software module, or both the hardware structure and the software module depends on a specific application and a design constraint condition of the technical solutions.

FIG. 13 is a block diagram of a communication apparatus according to this application. As shown in FIG. 13, the communication apparatus 1300 may include a transceiver unit 1320.

In a possible design, the communication apparatus 1300 may correspond to the relay device in the foregoing method, a chip configured (or used) in the relay device, or another apparatus, module, circuit, unit, or the like that can implement the method performed by the relay device.

It should be understood that the communication apparatus 1300 may include units configured to perform the method performed by the relay device in the method shown in FIG. 2. In addition, the units in the communication apparatus 1300 and the foregoing other operations and/or functions are separately used to implement corresponding procedures in the method shown in FIG. 2.

Optionally, the communication apparatus 1300 may further include a processing unit 1310. The processing unit 1310 may be configured to process instructions or data, to implement corresponding operations.

It should be further understood that, when the communication apparatus 1300 is the chip configured (or used) in the relay device, the transceiver unit 1320 in the communication apparatus 1300 may be an input/output interface or a circuit in the chip, and the processing unit 1310 in the communication apparatus 1300 may be a processor in the chip.

Optionally, the communication apparatus 1300 may further include a storage unit 1330. The storage unit 1330 may be configured to store instructions or data, and the processing unit 1310 may execute the instructions or the data stored in the storage unit, so that the communication apparatus implements corresponding operations.

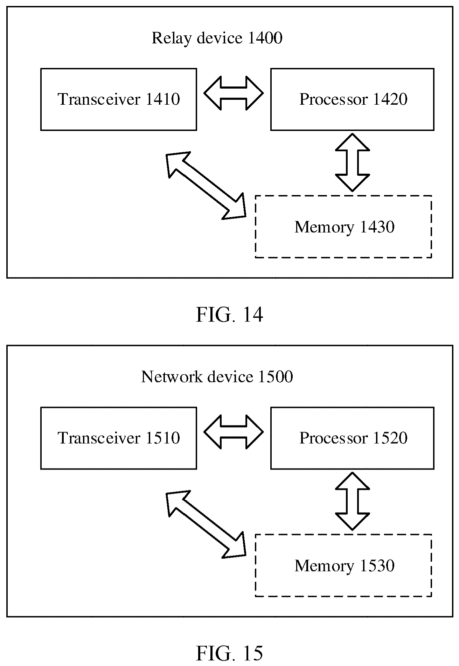

It should be understood that the transceiver unit 1320 in the communication apparatus 1300 may be implemented through a communication interface (for example, a transceiver or an input/output interface), for example, may correspond to a transceiver 1410 in a relay device 1400 shown in FIG. 14. The processing unit 1310 in the communication apparatus 1300 may be implemented by using at least one processor, for example, may correspond to a processor 1420 in the relay device 1400 shown in FIG. 14. The processing unit 1310 in the communication apparatus 1300 may alternatively be implemented by using at least one logic circuit. The storage unit 1330 in the communication apparatus 1300 may correspond to a memory 1430 in the relay device 1400 shown in FIG. 14.

It should be further understood that specific processes in which the units perform the foregoing corresponding steps are described in detail in the foregoing methods. For brevity, details are not described herein again.

In another possible design, the communication apparatus 1300 may correspond to the network device in the foregoing method, a chip configured (or used) in the network device, or another apparatus, module, circuit, unit, or the like that can implement the method performed by the network device.

It should be understood that the communication apparatus 1300 may include units configured to perform the method performed by the network device in the method shown in FIG. 2. In addition, the units in the communication apparatus 1300 and the foregoing other operations and/or functions are separately used to implement corresponding procedures in the method shown in FIG. 2.

Optionally, the communication apparatus 1300 may further include a processing unit 1310. The processing unit 1310 may be configured to process instructions or data, to implement corresponding operations.

It should be further understood that, when the communication apparatus 1300 is the chip configured (or used) in the network device, the transceiver unit 1320 in the communication apparatus 1300 may be an input/output interface or a circuit in the chip, and the processing unit 1310 in the communication apparatus 1300 may be a processor in the chip.

Optionally, the communication apparatus 1300 may further include a storage unit 1330. The storage unit 1330 may be configured to store instructions or data, and the processing unit 1310 may execute the instructions or the data stored in the storage unit, so that the communication apparatus implements corresponding operations.

It should be understood that when the communication apparatus 1300 is the network device, the transceiver unit 1320 in the communication apparatus 1300 may be implemented through a communication interface (for example, a transceiver or an input/output interface), for example, may correspond to a transceiver 1510 in a network device 1500 shown in FIG. 15. The processing unit 1310 in the communication apparatus 1300 may be implemented by using at least one processor, for example, may correspond to a processor 1520 in the network device 1500 shown in FIG. 15. The processing unit 1310 in the communication apparatus 1300 may be implemented by using at least one logic circuit. The storage unit 1330 in the communication apparatus 1300 may correspond to a memory 1530 in the network device 1500 shown in FIG. 15.

It should be further understood that specific processes in which the units perform the foregoing corresponding steps are described in detail in the foregoing methods. For brevity, details are not described herein again.

It should be noted that, during specific implementation, the transceiver unit 1320 in the communication apparatus 1300 may include a sending unit and/or a receiving unit. The receiving unit is configured to receive a signal, and the sending unit is configured to send a signal. Specifically, whether the communication apparatus 1300 includes the sending unit may be determined based on whether the foregoing solutions performed by the communication apparatus 1300 includes a sending action, and whether the communication apparatus 1300 includes the receiving unit may be determined based on whether the foregoing solutions performed by the communication apparatus 1300 includes a receiving action.

FIG. 14 is a diagram of a structure of a relay device 1400 according to this application. The relay device 1400 may be used in the system shown in FIG. 1, and performs functions of the relay device in the foregoing method. As shown in the figure, the relay device 1400 includes a processor 1420 and a transceiver 1410. Optionally, the relay device 1400 further includes a memory. The processor 1420, the transceiver 1410, and the memory may communicate with each other through an internal connection path, to transfer a control signal and/or a data signal. The memory is configured to store a computer program, and the processor 1420 is configured to execute the computer program in the memory 1430, to control the transceiver 1410 to receive/send a signal.

The processor 1420 may be configured to perform an action that is described in the foregoing method and that is implemented inside the relay device, and the transceiver 1410 may be configured to perform an action that is described in the foregoing methods and that is of sending to the network device or receiving from the network device by the relay device. For details, refer to the descriptions in the foregoing method. Details are not described herein again.

FIG. 15 is a diagram of a structure of a network device 1500 according to this application. The network device 1500 may be used in the system shown in FIG. 1, and performs functions of the network device in the foregoing method. As shown in the figure, the network device 1500 includes a processor 1520 and a transceiver 1510. Optionally, the network device 1500 further includes a memory. The processor 1520, the transceiver 1510, and the memory may communicate with each other through an internal connection path, to transfer a control signal and/or a data signal. The memory 1530 is configured to store a computer program, and the processor 1520 is configured to execute the computer program in the memory, to control the transceiver 1510 to receive/send a signal.

The processor 1520 may be configured to perform an action that is described in the foregoing method and that is implemented inside the network device, and the transceiver 1510 may be configured to perform an action that is described in the foregoing method and that is of sending to the relay device or receiving from the relay device by the network device. For details, refer to the descriptions in the foregoing method. Details are not described herein again.

In the relay device shown in FIG. 14 and the network device shown in FIG. 15, the processor and the memory may be combined into one processing apparatus, and the processor is configured to execute program code stored in the memory to implement the foregoing functions. During specific implementation, the memory may alternatively be integrated into the processor, or may be independent of the processor. The processor may correspond to the processing unit in FIG. 13. The transceiver may correspond to the transceiver unit in FIG. 13. The transceiver 1410 may include a receiver (which is also referred to as a receiver machine or a receiver circuit) and/or a transmitter (which is also referred to as a transmitter machine or a transmitter circuit). The receiver is configured to receive a signal, and the transmitter is configured to transmit a signal.

In this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams in this application. The general-purpose processor may be a microprocessor, any conventional processor, or the like. The steps of the methods with reference to this application may be directly performed and completed by a hardware processor, or may be performed and completed by a combination of hardware in the processor and a software module.

In this application, the memory may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can be used to carry or store expected program code in a form of an instruction or a data structure and that can be accessed by a computer. However, this is not limited thereto. The memory in this application may alternatively be a circuit or any other apparatus that can implement a storage function, and is configured to store program instructions and/or data.

This application further provides a processing apparatus, including a processor and a (communication) interface. The processor is configured to perform the method in any one of the foregoing methods.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

According to the methods provided in this application, this application further provides a computer program product. The computer program product includes computer program code, and when the computer program code is executed by one or more processors, an apparatus including the processor is enabled to perform the method shown in FIG. 2.

All or some of the technical solutions provided in this application may be implemented by using software, hardware, firmware, or any combination thereof. When software is used to implement the technical solutions, all or a part of the technical solutions may be implemented in a form of a computer program product. The computer program product includes one or more computer instructions. When the computer program instructions are loaded and executed on the computer, the procedure or functions according to this application are all or partially generated. The foregoing computer instructions may be stored in a computer-readable storage medium, or may be transmitted from a computer-readable storage medium to another computer-readable storage medium. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the methods provided in this application, this application further provides a computer-readable storage medium. The computer-readable storage medium stores program code, and when the program code is run by one or more processors, an apparatus including the processor is enabled to perform the method shown in FIG. 2.

According to the methods provided in this application, this application further provides a system, including the foregoing one or more relay devices. The system may further include the foregoing one or more network devices. The system may further include the foregoing terminal device.

In several embodiments provided in this application, it should be understood that the disclosed system, apparatus, and method may be implemented in other manners. For example, the described apparatus is merely an example. For example, division into the units is merely logical function division and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electronic form, a mechanical form, or another form.

Units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

It may be understood that, in embodiments of this application, the relay device and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

The foregoing descriptions are merely specific implementations of this application, but the protection scope of this application is not limited thereto. Any variation or replacement that can be readily figured out by a person skilled in the art within the technical scope disclosed in this application shall fall within the protection scope of this application. Therefore, the protection scope of this application shall be subject to the protection scope of the claims.

**Claims**

1. A relay transmission method, comprising:

   receiving, by a relay device, first information from a network device, wherein the first information is used to configure L time offsets and N relay beams, and L and N are positive integers;
   receiving, by the relay device, second information from the network device, wherein the second information indicates T pieces of time resource information and L relay beams that correspond to the L time offsets, and T is a positive integer less than or equal to L;
   determining, by the relay device, L time resources in L time units based on the L time offsets and the T pieces of time resource information; and
   forwarding, by the relay device, a signal from the network device to a terminal device or a signal from a terminal device to the network device via the L relay beams and the L time resources.

2. The method according to claim 1, wherein the first information is specifically used to configure at least one relay beam set corresponding to the L time offsets, the at least one relay beam set comprises the N relay beams, one time offset corresponds to one relay beam set, and one relay beam set corresponds to one or more time offsets; and
   a first relay beam that is indicated by the second information and that corresponds to a first time offset is a relay beam in the relay beam set corresponding to the first time offset, the first time offset is one of the L time offsets, and the first relay beam is one of the L relay beams.

3. The method according to claim 1 or 2, wherein

   the first information comprises the L time offsets; or
   the first information comprises a second time offset in the L time offsets and L-1 deviations, and the L-1 deviations are deviations between each of L-1 time offsets other than the second time offset in the L time offsets and the second time offset; or
   the first information comprises a second time offset in the L time offsets, one deviation, and the quantity L of time offsets, and the L time offsets are an arithmetic sequence that uses the second time offset as a start value and uses the deviation as a difference; or
   the first information comprises a second time offset in the L time offsets and the quantity L of time offsets, and the L time offsets are an arithmetic sequence that uses the second time offset as a start value and uses a predefined deviation as a difference.

4. The method according to any one of claims 1 to 3, wherein

   one piece of time resource information comprises one time parameter group; or
   one piece of time resource information comprises an identifier of one of M time parameter groups, and the M time parameter groups are configured based on the first information; or
   one piece of time resource information comprises at least one parameter in one time parameter group, one time parameter group comprises a plurality of parameters, and a parameter other than the at least one parameter in the plurality of parameters is configured based on the first information or predefined, wherein
   one time parameter group is used to determine at least one of the L time resources.

5. The method according to any one of claims 1 to 4, wherein the first information is further used to configure time resource information corresponding to each of the N relay beams, the T pieces of time resource information are time resource information that corresponds to the L relay beams indicated by the second information, T is equal to L, one piece of time resource information comprises one time parameter group, and one time parameter group is used to determine at least one of the L time resources.

6. The method according to any one of claims 1 to 4, wherein

   the L time offsets sequentially and cyclically correspond to the T pieces of time resource information; or

in the L time offsets, every P consecutive time offsets correspond to one piece of time resource information in a sequence of arrangement, wherein P is an integer determined based on L and T; and
the first time offset in the L time offsets is used to determine a first time unit in the L time units, and the time resource information corresponding to the first time offset is used to determine the time resource in the first time unit.

7. The method according to any one of claims 1 to 6, wherein the L time offsets comprise at least two time offsets with equal values, the at least two time offsets correspond to a same time unit, and the time resource information corresponding to the at least two time offsets is used to determine different time resources in the same time unit.

8. The method according to any one of claims 1 to 7, wherein

the quantity N of relay beams configured based on the first information is used to determine the quantity L or a maximum value of L of the L time offsets; and/or
the first information is further used to configure the M time parameter groups, one time parameter group is used to determine at least one of the L time resources, the quantity M of time parameter groups configured based on the first information is used to determine the quantity L of time offsets or the maximum quantity $L_{max}$ of time offsets configured based on the first information, and L is less than or equal to $L_{max}$.

9. The method according to any one of claims 1 to 8, wherein

the quantity N of relay beams configured based on the first information is used to determine the quantity T of time resource information indicated by the second information or a maximum quantity $T_{max}$, and T is less than $T_{max}$; or
the first information is further used to configure the M time parameter groups, one time parameter group is used to determine at least one of the L time resources, the quantity M of time parameter groups configured based on the first information is used to determine the quantity T of time resource information indicated by the second information or the maximum quantity $T_{max}$, and T is less than $T_{max}$.

10. The method according to any one of claims 1 to 9, wherein determining, by the relay device, the L time resources in the L time units based on the L time offsets and the T pieces of time resource information comprises:

determining, by the relay device, the L time units based on a second time unit, an initial offset, and the L time offsets, wherein the second time unit is a time unit in which the second information is located, and an offset between one of the L time units and the second time unit is a sum of one time offset and the initial offset; and
determining, by the relay device, the L time resources in the L time units based on the T pieces of time resource information.

11. The method according to claim 10, wherein the initial offset is determined based on one or more pieces of the following capability information of the relay device:
beam switching time on a backhaul link, beam switching time on an access link, decoding time of a physical downlink control channel PDCCH, a subcarrier spacing of a PDCCH, an identifier of a subcarrier spacing of a PDCCH, a subcarrier spacing of the time resource, or an identifier of a subcarrier spacing of the time resource.

12. The method according to any one of claims 1 to 11, wherein the first information is used to configure a plurality of resource sets; and

each resource set corresponds to V time resource sets, each time resource set comprises a plurality of time parameter groups, and V is a positive integer; and/or
each resource set corresponds to one or more beam sets.

13. The method according to claim 12, wherein the second information further indicates identifiers of one or more resource sets in the plurality of resource sets.

14. The method according to claim 12 or 13, wherein the T pieces of time resource information correspond to V time resource sets corresponding to one resource set indicated by the second information, and one piece of time resource information indicates one time parameter group in one time resource set.

15. The method according to claim 14, wherein a quantity of bits that are in the second information and that are occupied by one of the T pieces of time resource information is determined based on a quantity of time parameter groups comprised in a time resource set corresponding to the time resource information.

16. A relay transmission method, applied to a system comprising a network device and a relay device, and comprising:

sending, by the network device, first information to the relay device, wherein the first information is used to configure L time offsets and N relay beams, and L and N are positive integers;
sending, by the network device, second information to the relay device, wherein the second information indicates L relay beams in the N relay beams and T pieces of time resource information that correspond to the L time offsets, and T is a positive integer less than or equal to L;
determining, by the relay device, L time resources in L time units based on the L time offsets and the T pieces of time resource information; and
forwarding, by the relay device, a signal from the network device or a signal from a terminal device via the L relay beams and the L time resources.

17. A communication apparatus, comprising:

a transceiver unit, configured to receive first information from a network device, wherein the first information is used to configure L time offsets and N relay beams, and L and N are positive integers, wherein
the transceiver unit is further configured to receive second information from the network device, wherein the second information indicates T pieces of time resource information and L relay beams that correspond to the L time offsets, and T is a positive integer less than or equal to L; and
a processing unit, configured to determine L time resources in L time units based on the L time offsets and the T pieces of time resource information, wherein
the processing unit is further configured to forward a signal from the network device to a terminal device or a signal from a terminal device to the network device via the L relay beams and the L time resources.

18. A communication apparatus, wherein the communication apparatus comprises a processor, and the processor is configured to execute a computer program or computer instructions in a memory, to perform the method according to any one of claims 1 to 15.

19. The communication apparatus according to claim 18, wherein the communication apparatus further comprises the memory.

20. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 11 by using a logic circuit or by executing code instructions.

21. A computer-readable storage medium, wherein the storage medium stores a computer program or instructions, and when the computer program or the instructions are executed by a communication apparatus, the method according to any one of claims 1 to 11 is implemented.

22. A communication system, wherein the system comprises a network device and a relay device, and the network device exchanges information with the relay device, to enable the system to implement the method according to claim 12.

110

120

Backhaul
link

Access
link

130

(a)

110

120A

120B

130

(b)

120

110

130

(c)

FIG. 1

200

| Network device | | Relay device |

S201: Send first information, where the first information is used to configure L time offsets and N relay beams

S202: Send second information, send second information, where the second information indicates T pieces of time resource information and Q relay beams that correspond to the L time offsets, and T, L, and Q are positive integers

S203: Determine, based on the first information and the second information, J time resources in J time units and J relay beams corresponding to the J time resources

S204: Forward a signal from the network device or a signal from a terminal device via the J relay beams and the J time resources

FIG. 2

| Time offset 0 | Time offset 1 | Time offset 2 | Time offset 3 | Time offset 4 |

| Time resource information 0 | Time resource information 1 |

FIG. 3

| Time offset 0 | Time offset 1 | Time offset 2 | Time offset 3 | Time offset 4 |

| Time resource information 0 | Time resource information 1 |

FIG. 4

FIG. 5

FIG. 6

RRC message: | Initial time offset: 3 | Deviation: 2 | Quantity of time offsets: 3

Three time offsets: 3 5 7

Slots: 0 1 2 3 4 5 6 7 8 9

DCI

Three relay beams: Beam 0 | Beam 7 | Beam 3

Two pieces of time resource information: SLIV= 55 | SLIV= 27

FIG. 7

RRC message: | Initial time offset: 3 | Quantity of time offsets: 5

Slots: 0 1 2 3 4 5 6 7 8 9

DCI

Five relay beams: Beam 0 | Beam 7 | Beam 3 | Beam 2 | Beam 5

Two pieces of time resource information: SLIV= 55 | SLIV= 27

FIG. 8

L time offsets:

| 3 | 3 | 6 | 7 | 8 |
|---|---|---|---|---|

Slots:

| | 0 | 1 | 2 | A | 3 | B | 4 | 5 | 6 | 7 | 8 | 9 |
|---|---|---|---|---|---|---|---|---|---|---|---|---|

DCI

L relay beams:

| Beam 0 | Beam 7 | Beam 3 | Beam 2 | Beam 5 |
|---|---|---|---|---|

T pieces of time resource information:

| SLIV= 42 | SLIV= 50 | SLIV= 40 | SLIV= 40 | SLIV= 40 |
|---|---|---|---|---|

FIG. 9

Take effect for a first time      Take effect for a second time

Slots:

| 0 | 1 | 2 | 3 | 4 | 5 | 6 | 7 | 8 | 9 | 0 | 1 | 2 | 3 | 4 | 5 | 6 | 7 | 8 | 9 |
|---|---|---|---|---|---|---|---|---|---|---|---|---|---|---|---|---|---|---|---|

Radio frame n      Radio frame n+1

FIG. 10

Take effect for a first time      Take effect for a second time

Slots:

| 0 | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|----|----|----|----|----|----|----|----|----|----|

FIG. 11

Resource set 1

$N_1$ relay beams: | 0 | 2 | ... | 7 | ... |

$L_1$ time offsets: | 1 | 3 | ... | $n_1$ |

Resource set 2

$N_2$ relay beams: | 1 | 2 | 5 | 9 | ... |

$L_2$ time offsets: | 1 | 2 | ... | $n_2$ |

Slots: | 0 | | 1 | 2 | 3 | 4 | 5 | ... | x | x+1 | x+2 | x+3 | ... | x+$n_2$ |

DCI

| Beam 7 | Beam 2 | ... | Beam 0 | Beam 2 | Beam 5 | ... | Beam 9 |

$L_1$ relay beams          $L_2$ relay beams

| SLIV= 42 | SLIV= 27 |

$T_1$ pieces of time resource information

$T_2$ pieces of time resource information

FIG. 12

Communication apparatus 1300

Processing unit 1310

Transceiver unit 1320

Storage unit 1330

FIG. 13

Relay device 1400

Transceiver 1410 ⟺ Processor 1420

⇕

Memory 1430

FIG. 14

Network device 1500

Transceiver 1510 ⟺ Processor 1520

⇕

Memory 1530

FIG. 15

## INTERNATIONAL SEARCH REPORT

| International application No. |
| --- |
| **PCT/CN2024/076169** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNKI, VEN, EXTXTC, WPABS, CNTXT, 3GPP: 波束, 偏移, 偏置, 时间, 中继, 转发, beam, offset, time, relay, forward

### C. DOCUMENTS CONSIDERED TO BE RELEVANT

| Category* | Citation of document, with indication, where appropriate, of the relevant passages | Relevant to claim No. |
| --- | --- | --- |
| A | CN 114270910 A (BEIJING XIAOMI MOBILE SOFTWARE CO., LTD.) 01 April 2022 (2022-04-01) description, paragraphs 145-247 | 1-22 |
| A | CN 113785504 A (QUALCOMM INC.) 10 December 2021 (2021-12-10) entire document | 1-22 |
| A | KR 20220077890 A (ELECTRONICS AND TELECOMMUNICATIONS RESEARCH INSTITUTE) 09 June 2022 (2022-06-09) entire document | 1-22 |
| A | US 2020366363 A1 (QUALCOMM INC.) 19 November 2020 (2020-11-19) entire document | 1-22 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 May 2024** | **15 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076169**

| Patent document cited in search report | | | Publication date (day/month/year) | Patent family member(s) | | | Publication date (day/month/year) |
|---|---|---|---|---|---|---|---|
| CN | 114270910 | A | 01 April 2022 | WO | 2023092468 | A1 | 01 June 2023 |
| CN | 113785504 | A | 10 December 2021 | US | 2020359434 | A1 | 12 November 2020 |
| | | | | EP | 3966958 | A1 | 16 March 2022 |
| | | | | WO | 2020227267 | A1 | 12 November 2020 |
| KR | 20220077890 | A | 09 June 2022 | US | 2022174509 | A1 | 02 June 2022 |
| US | 2020366363 | A1 | 19 November 2020 | WO | 2020232098 | A1 | 19 November 2020 |

Form PCT/ISA/210 (patent family annex) (July 2022)

**REFERENCES CITED IN THE DESCRIPTION**

**Patent documents cited in the description**

*   CN 202310176131
*   CN 202310401615